(19) Europäisches Patentamt / European Patent Office / Office européen des brevets

(11) **EP 3 674 968 B1**

(12) **EUROPEAN PATENT SPECIFICATION**

(45) Date of publication and mention
of the grant of the patent:
**05.06.2024 Bulletin 2024/23**

(21) Application number: **18874465.0**

(22) Date of filing: **17.10.2018**

(51) International Patent Classification (IPC):
**G06N 3/048** (2023.01)     **G06V 10/20** (2022.01)
**G06V 10/32** (2022.01)     **G06V 10/82** (2022.01)
**G06V 40/18** (2022.01)     **G06N 3/045** (2023.01)
**G06V 10/764** (2022.01)     **G06V 10/774** (2022.01)
**G06N 3/084** (2023.01)

(52) Cooperative Patent Classification (CPC):
**G06N 3/084; G06N 3/045; G06V 10/20;
G06V 10/32; G06V 10/764; G06V 10/774;
G06V 10/82; G06V 40/197;** G06N 3/048;
G06V 2201/03; Y02T 10/40

(86) International application number:
**PCT/CN2018/110664**

(87) International publication number:
**WO 2019/085757 (09.05.2019 Gazette 2019/19)**

(54) **IMAGE CLASSIFICATION METHOD, SERVER AND COMPUTER READABLE STORAGE MEDIUM**

BILDKLASSIFIZIERUNGSVERFAHREN, SERVER UND COMPUTERLESBARES SPEICHERMEDIUM

PROCÉDÉ DE CLASSIFICATION D'IMAGE, SERVEUR ET SUPPORT DE STOCKAGE LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2017 CN 201711060208**

(43) Date of publication of application:
**01.07.2020 Bulletin 2020/27**

(73) Proprietor: **Tencent Technology (Shenzhen)
Company Limited
Shenzhen, Guangdong, 518057 (CN)**

(72) Inventors:
• **PENG, Pai
Shenzhen
Guangdong 518057 (CN)**
• **WU, Kailin
Shenzhen
Guangdong 518057 (CN)**
• **GUO, Xiaowei
Shenzhen
Guangdong 518057 (CN)**

(74) Representative: **Nederlandsch Octrooibureau
P.O. Box 29720
2502 LS The Hague (NL)**

(56) References cited:
EP-A1- 3 218 076     CN-A- 102 930 293
CN-A- 106 874 921     CN-A- 107 205 162
CN-A- 107 292 229     CN-A- 107 679 525
US-A1- 2004 126 008

• SHIJIE JIA ET AL: "Research on data augmentation for image classification based on convolution neural networks", 2017 CHINESE AUTOMATION CONGRESS (CAC), IEEE, 20 October 2017 (2017-10-20), pages 4165-4170, XP033290098, DOI: 10.1109/CAC.2017.8243510 [retrieved on 2017-12-29]
• SAVU MADALINA ET AL: "Blood vessel segmentation in eye fundus images", 2017 INTERNATIONAL CONFERENCE ON SMART SYSTEMS AND TECHNOLOGIES (SST), IEEE, 18 October 2017 (2017-10-18), pages 245-249, XP033269469, DOI: 10.1109/SST.2017.8188703 [retrieved on 2017-12-12]

• OTÁLORA SEBASTIAN ET AL: "Training Deep Convolutional Neural Networks with Active Learning for Exudate Classification in Eye Fundus Images", 8 September 2017 (2017-09-08), BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, XP047435522, ISBN: 978-3-642-17318-9 [retrieved on 2017-09-08] * abstract * * Item 4.1 *

**Description**

The present application claims priority of Chinese patent application No. 2017110602082, titled "Image Classification Method, Server, and Computer-readable Storage Medium" and filed on November 1, 2017 with the Patent Office of the People's Republic of China.

**FIELD**

The present application relates to image processing technologies, and particularly, to an image classification method, a server storing computer readable instructions executable by a processor for performing the image classification method and a computer-readable storage medium storing computer readable instructions executable by a processor for performing the image classification method.

**BACKGROUND**

With the wide application of multimedia technologies and computer networks, a large amount of image data appears on the Internet. It becomes increasingly important to effectively manage those image files, to automatically identify and to classify the contents of the images.

At present, with the continuous improvement and development in machine learning methods, deep learning algorithms have been paid growing attention, among which convolutional neural network (CNN) is an important algorithm in deep learning and has become a research hotspot in the field of image recognition. CNN-based image classification can automatically extract feature information from images and express the images using extracted features.

When classifying images of different fields or categories using CNN, respective network models have to be established for each of the fields or categories. Layers and the overall architecture of each network model are determined through training. In order to obtain better feature expression capability to attain better classification accuracy, especially with respect to fields with higher requirements for classification accuracy, it often requires more raw image data of the same or similar category as training data for images of the same field or category, so as to increase the network depth and enlarge the network scale. More training data is required to determine and construct respective architecture of each layer of the network model based on the architecture of the previous layer, which makes the training of the network model complex and the image classification accuracy of the trained network model unstable.

EP 3 218 076 B1 describes a system and method for toy recognition. A system and method for automatic computer aided optical recognition of toys, for example, construction toy elements, recognition of those elements on digital images and associating the elements with existing information is presented. The system and method may detect more than one toy element on the image and identify them. The system is configured to learn to recognize and detect any number of various toy elements by training a deep convolutional neural network.

Shijie et al., "Research on data augmentation for image classification based on convolution neural networks", 2017 Chinese Automation congress (CAC), IEEE, 20 October 2017, pages 4165-4170, describes data augmentation techniques for image classification tasks with deep convolution neural networks.

Savu et al., "Blood Vessel Segmentation in Eye Fundus Images", 2017 International Conference on Smart Systems and Technologies (SST), IEEE, 18 October 2017, pages 245-249, describes a convolutional neural network architecture for blood vessel segmentation in retinal images.

Otálora et al., "Training Deep Convolutional Neural Networks with Active Learning for Exudate Classification in Eye Fundus Images", 8 September 2017, Big Data Analytics in the Social and Ubiquitous context, 5th International Workshop on Modeling Social Media, MSM 2014, 5th International Workshop on Mining Ubiquitous and Social Environments, MUSE 2014, and First International Workshop on machine learning, pages 146-154, presents an approach to detect exudates and highlight the most interesting areas of the eye fundus images using an active learning algorithm called expected gradient length (EGL) that works jointly with the CNN model parameters to select the most informative patches and images to train.

**Summary**

According to various embodiments of the present application, provided are an image classification method, a server, and a computer-readable storage medium, as defined by the appended claims.

An image classification method, executable by a server, is provided as defined by the appended claims.

A server as defined by the appended claims includes a processor and a memory which stores computer readable instructions executable by the processor to execute the procedures of the image classification method.

A computer readable storage medium as defined by the appended claims stores computer readable instructions executable by one or multiple processors to execute the procedures of the image classification method.

Details of one or multiple embodiments of the present application are set forth in the accompanying drawings and the description below. Other features and advantages of the present application will be apparent from the specification, drawings, and claims.

**Brief description of the drawings**

In order to make the technical scheme of embodiments of the present disclosure clearer, the following is a brief introduction of the drawings used in description of the embodiments. Obviously, the following drawings are merely some of the embodiments, and based on which other drawings can be obtained by those skilled in the art without doing any inventive work.

FIG. 1 is a schematic diagram of an application scenario of an image classification method according to an embodiment;

FIG. 2 is a flowchart of an image classification method according to an embodiment;

FIG. 3 is a schematic diagram of a neuron model of a BP neural network according to an embodiment;

FIG. 4 is a schematic diagram of a BP neural network according to an embodiment;

FIG. 5 is a schematic diagram of a convolutional layer operation of a CNN according to an embodiment;

FIG. 6 is a schematic diagram of a pooling layer of a CNN according to an embodiment;

FIG. 7 is a flowchart of an image classification method according to an embodiment;

FIG. 8 is a schematic diagram illustrating the structure of a neural network model in the embodiment as shown in FIG. 7;

FIG. 9 is a flowchart of an image classification method according to another embodiment;

FIG. 10 is a schematic diagram of the hardware architecture of a server according to an embodiment; and

FIG. 11 is a schematic diagram of the structure of a server in another embodiment.

**Detailed description**

The present disclosure is further explained hereinafter in detail with reference to the accompanying drawings as well as embodiments so as to make the objective, technical solution and merits thereof more apparent. It should be appreciated that the embodiments offered herein are used for explaining the present invention only and shall not be used for limiting the protection scope of the present invention.

Unless defined otherwise, all technical and scientific terms used herein have the same meaning as commonly understood by those of ordinary skill in the art to which the present application belongs. The terminology used in the specification of the present application is for the purpose of describing particular embodiments only and is not intended to be limiting of the present application. As used herein, the term "and/or" includes any and all combinations of one or multiple of the associated listed items.

The nouns and terms used in the embodiments of the present application are explained before the present application is explained in further detail. Explanations of the nouns and terms involved in the embodiments of the present application are set forth as follows.

1) Objects, as used herein, refer to objects to be classified, such as humans, things, etc..

2) A sample image refers to an image including imaging data of an object in any digital format such as JPEG.

3) Image sharpening (also known as image enhancement) refers to the process of enhancing the imaging characteristics of an object in a sample image through various means, and enlarging the distinctiveness of an imaging area of the object against other areas in the sample image.

4) Loss function, also referred to as cost function, is the objective function of neural network optimization.

5) Neural Networks (NN) refers to a complex network system formed by a large number of basic processing units (called neurons) widely connected with each other, reflects many basic features of human brain functions, and is a highly complex nonlinear dynamic learning system.

Embodiments of the present application provide an image classification method, a server implementing the image classification method, and a storage medium storing an executable program for implementing the image classification method. With respect to the implementation of the image classification method, embodiments of the present application provide a scheme implemented at a terminal side and at a server side, and an exemplary implementation scenario of image classification is described.

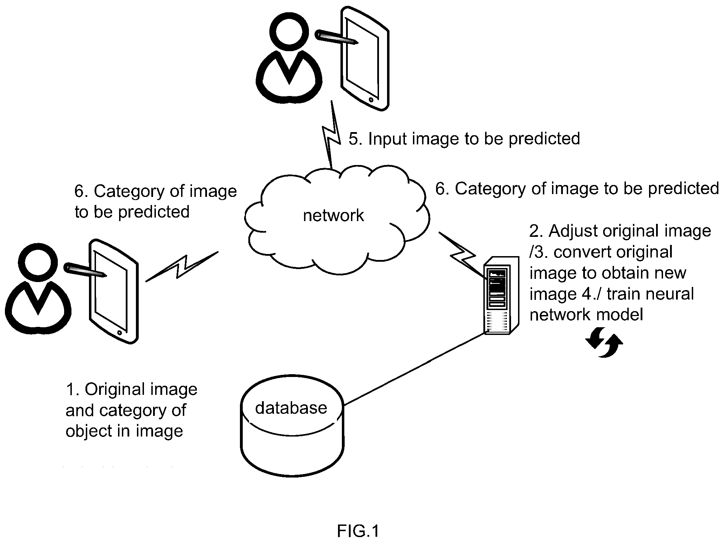

As shown in FIG. 1, which is a schematic diagram of an application scenario applicable by the image classification method according to an embodiment of the present application, a user may install an image classification application in a terminal, input an image to be predicted (or "prediction image" for short) into the image classification application, and sends the prediction image to a server. The server may apply feature extraction to the prediction image and to reference images labeled with the category of an object in the reference image, obtain a classification result after determining the category of the prediction image according to extracted features, and send the classification result to the terminal. The image classification application may be an application capable of determining categories of different images by identifying objects in the images using a neural network model obtained from neural network training for objects contained in different images. The reference images whose objects are labeled with respective categories may be images in a training set for neural network training.

Taking a human face as an example of an object in an image, an image classification application refers to an image classification application which identifies a preset part (an eye or another part) or an overall feature (all features forming a face) of a human face from a prediction image so as to determine the category of the prediction image. A category refers to a dimension for classifying an object in images. The dimension of the classification may be an exterior characteristic presented by the object in appearance, such as, taking eyes as an example, upturned eyes, triangular eyes, or the like. The dimension may also be an interior characteristic hidden under the appearance of the object, such as, still taking eyes as an example, personality, age, illness, etc.

In an example, the original image is an image of eyes, the object in the original image is eyes, and four categories of the object are upturning eyes, triangle eyes, long eyes, narrow eyes and round eyes, a user may install an image classification application in a terminal and input a prediction eye image into the image classification application. A server may acquire the prediction eye image, extract shape features of the eyes from the prediction eye image, determine an image from a training set which is for training a neural network model as a reference image, extract shape features of the eyes from the reference image, determine one of the upturning eyes, triangle eyes, long eyes, narrow eyes and round eyes to be the category of the eyes in the prediction eye image based on the similarity between the extracted shape features and the shape features used in category determination during training of the neural network model, and send the determined category to the terminal.

In an example, the original image is an image of eye fundus, the object in the original image is an eyeball, and four categories of the object are normal, early stage, advanced stage (or intermediate stage) and terminal stage, a user may install an image classification application in a terminal and input a prediction eye fundus image into the image classification application. A server may acquire the prediction eye fundus image, extract structure features of the eyeball in the prediction eye fundus image, determine an image from a training set which is for training a neural network model as a reference image, extract structure features of the eyeballs from the reference images, determine one of the normal, early stage, advanced stage (or intermediate stage) and terminal stage to be the category of the eyeball in the prediction eye fundus image based on the similarity between the extracted structure features and the structure features used in category determination during training of the neural network model, and send the determined category to the terminal.

The above description of the application scenario is illustrated with the image of the eye which is a human body part as an example of the original image. Embodiments, however, is not limited thereto, and the image classification method of the embodiment of the present application may be applied to images in other fields or categories for training the neural network model and predicting the category of an object included in an image.

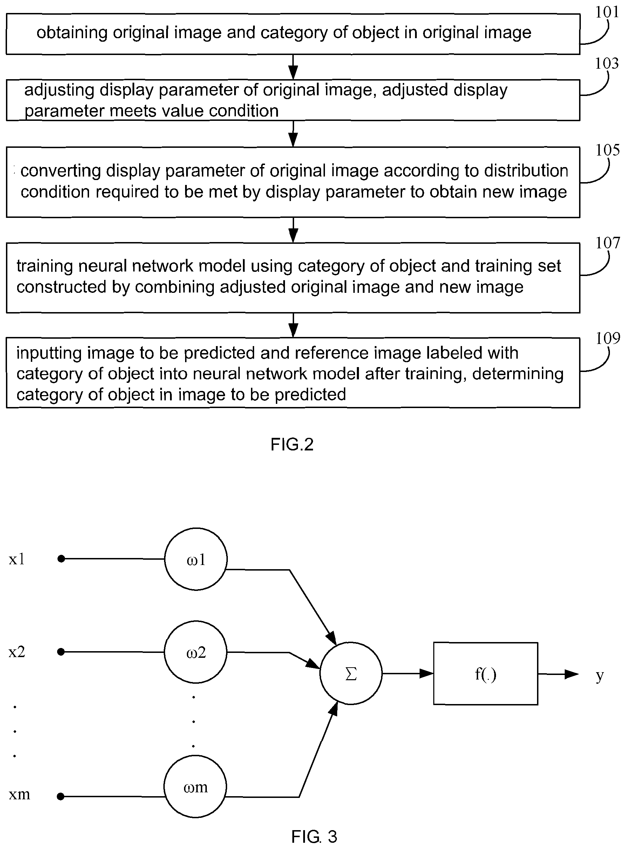

Please refer to FIG. 2 which is a candidate flowchart of the image classification method according to an embodiment of the present application whose steps will be described respectively.

At step 101, an original image and a category of an object in the original image are obtained.

An original image refers to a picture captured or drawn of a target object that needs to be classified. An object is a target object whose category is to be determined. The category of an object refers to the dimension in which the target object is to be classified. The category of the object in each original image may be predetermined according to the target of classifying the target object. In an embodiment, original images may be collected from an image library currently published on the Internet, and the categories of the object in the original images may be specified according to predetermined categories.

At step 103, a display parameter of the original image is adjusted, and the adjusted display parameter meets a value condition.

The display parameter of an image refer to value information in the image for adjusting the display effects of the image. Typical display parameters may include resolution, size, and color. In this embodiment, the display parameters of an image primarily include the orientation, size, brightness, contrast, aspect ratio, resolution, color, or the like, of the image. The value condition refers to a value range preset for each display parameter respectively. By adjusting a display parameter of an original image to meet the preset value range, the quality of images for training the neural network model can be improved, the training speed can be increased, and the accuracy can be improved.

At step 105, the display parameter of the original images is transformed to make the distribution of the display parameter conform to a required distribution condition to obtain new images.

The display parameter refers to value information in an image for adjusting display effects of the image, and mainly include the orientation, size, brightness, contrast, aspect ratio, resolution, color, or the like, of the image. The distribution condition refers to one of preset conditions which are required to be met by different display parameters, and are such as uniform distribution, random distribution, Gaussian distribution. According to the distribution conditions required to be met by the distribution of the display parameter, the original image may be transformed in real time to obtain more new images for data expansion, to increase the training data for training the neural network model.

At step 107, a neural network model is trained using the category of the object in the images and a training set constructed by combining the adjusted original images and the new images.

The procedure of constructing a training set by combining the adjusted original image and the new image may include constructing a multi-batch training set using combinations of adjusted original images serving as sample images, or may include constructing a multi-batch training set using combinations of new images serving as sample images, or may include constructing a multi-batch training set using combinations of the adjusted images and the new images together as sample images. Constructing the training set using combinations of the adjusted original images and the new images can generate an effective training set of a sufficient size for training the neural network model when there is limited number of original images with labeled categories of the object. Therefore, the over-fitting problem in neural network training can be avoided, and better training accuracy can be obtained. When the training set is constructed by combinations of image pairs as an example, in one embodiment, before training the neural network model based on the category of the included objects and the training set constructed by combing the adjusted original images and the new images, step 107 also includes: constructing the training set by combining the adjusted original images and the new images in pairs. When the total number of the adjusted original images and the new images is N, the number of sample data forming the training set is extended to N * (N-1) through constructing the training set using combined image pairs, thereby the amount of training data can be greatly increased. The different batches of combination constructed training sets are respectively input into the neural network model for training to implement multiple iterations. The training set used in one iteration may be a training set formed by combining the original images, or a training set formed by combining the new images, so that the data in the training set in one iteration are through basically the same processing, which may avoid training errors resulted from different image processing, and improve the training accuracy of the neural network model. Respective training sets used in different iterations may be any one selected from the training set formed by combining the original images and the training set formed by combining the new images.

The neural network model may be a neural network model obtained by pre-training using a known image data set. The neural network model may be a BP neural network model, a convolutional neural network model, or a variation thereof.

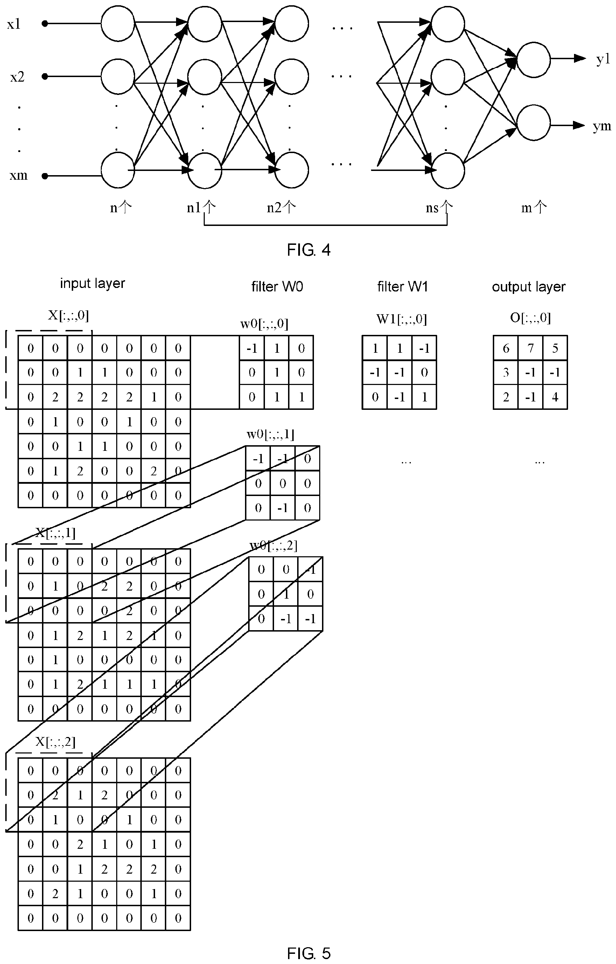

Basic elements of the BP neural network are neurons. FIG. 3 is a schematic diagram of a typical neuron model, where x1, x2 ... xm represent inputs, $\omega1$, $\omega2$, $\omega m$ represent synaptic weights, $\Sigma$ represents summing nodes, f ( .) represents an activation function, and y represents output. FIG. 4 is a schematic diagram of a neural network model formed by connecting a plurality of neurons according to a certain rule, n corresponds to an input layer, n1~ns correspond to intermediate layers, and m corresponds to an output layer. As can be seen from FIGs. 3 and 4, the BP neural network model mainly includes an input layer, a hidden layer (an intermediate layer) and an output layer. The number of input layer neurons is identical to the number of dimensions of input data, the number of output layer neurons is identical to the number of data to be fitted, and the number of hidden layer neurons and the number of layers are set according to an actual training target.

The convolutional neural network is a deep learning architecture formed by the heuristic infrastructure based on a cognitive mechanism of biological natural vision, and mainly includes a convolutional layer, a pooling layer and a full connection layer. The convolutional layer refers to a layer performing a convolutional operation of an image, and the convolutional operation refers to using a convolutional kernel to convolve with a corresponding area of the image to obtain a value, and then continuously moving the convolutional kernel to calculate convolution values until the convolution of the entire image is completed. In convolutional neural networks, besides the concept of convolutional operation, the calculations in the convolutional layer may also involve the concept of depth and step length. The depth determines the total number of neurons in one area, i.e. the total number of convolutional kernels performing convolutional operation on the same area. The step length refers to the total number of pixels over each movement of the convolutional kernel. FIG. 5 is a schematic diagram of the convolutional operations of the convolutional layer in an example. In the example, the height and width of the input layer is 7 * 7, the depth is 3, each of two filter filters has a height and width of 3 * 3, the depth is 3, and the size of convolutional kernel is 3 * 3. Calculations are performed respectively at the leftmost input layer (Input Volume) with the first filter (Filter WO), at the first layer of the input volume with the first layer of the Filter WO, at the second layer of the input volume with the second layer of the Filter WO, at the third layer of the input volume with the third layer of the Filter WO, and final results of the three layers are accumulated to obtain the first result matrix of the output layer (Output Volume). Similar process is carried out in turn until calculations are performed at the leftmost Input Volume with the second filter (Filter W1) to obtain the second result matrix of the Output Volume. The pooling layer is between the convolutional layers and is for compressing a preset block area of the input data of the previous layer into a value, to reduce the amount of data and the total number of convolutional parameters through the compressions step-by-step, and reduce over-fitting.

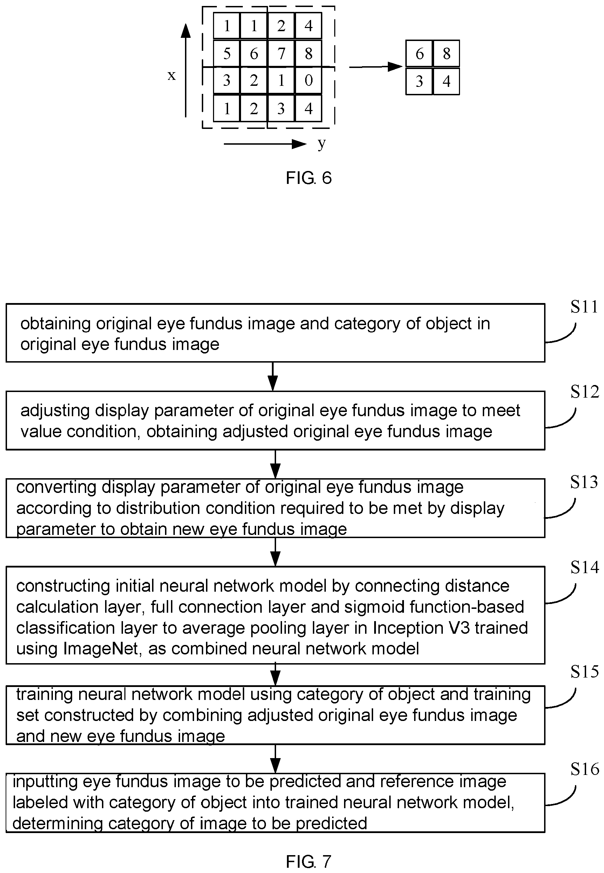

FIG. 6 is a schematic diagram of the operation at the pooling layer. The pooling layer uses the maximum value in a 2 * 2 area to represent the area. The full connection layer is mainly for learning, and mapping the learned distributed feature representations in a training set onto a sample mark space to obtain the weight of the neural network model.

The training of the neural network model mainly includes loading a training set and training model parameters. Loading a training set refers to inputting a training set constructed using the adjusted original images and the new images together with categories of an object into an initial neural network model for iterative training, calculating the costs using forward propagation, label information and a cost function, updating the parameters in each layer using back propagation cost function gradients to adjust the weights in the initial neural network model until the loss function of the neural network model meets a convergence condition, to obtain a trained neural network model.

At step 109, an image to be predicted (referred to as a prediction image for short) and a reference image with labeled category of an object are input into the neural network model based on the trained neural network model, and a judgment is made with respect to the category of the object in the prediction image.

Inputting the prediction image and the reference image with the labeled category of the object into the trained neural network model refers to using a combination of the prediction image and the reference image together with the labeled category of the object as the input of the neural network model. The reference image labeled with the category of the object may be an image in the training set, e.g., may be one of the original images and the new images. Corresponding features of the prediction image and corresponding features in the reference image are extracted using the neural network model, and the probability that the object in the prediction image belongs to the corresponding category may be determined according to the similarity between the extracted features and the features mapped to the sample label space in the model training process from the images corresponding to different categories, to determine the category of the object in the prediction image.

According to the image classification method provided by the embodiment of the present application, through acquiring an original image and the category of an object in the original image, a display parameter of the original image are adjusted to meet the value condition to obtain the adjusted original image; the display parameter of the original image are transformed to make the distribution of the display parameter conform to a required distribution condition, to obtain a new image; and a training set is constructed using combinations of the adjusted original images and the new images; thus it is possible to construct a more effective training set for training the neural network model with a multiplied total number of samples. Therefore, stable classification accuracy can be obtained even if there is limited number of original images labeled with object categories in the same field or category. When training is carried out based on the training set formed by combining the adjusted original images and the new images together with the categories of the object in the images, the training may be based on a known neural network model, and the trained neural network model with updated weights is used to predict the prediction image, thus the training method is simpler.

In another embodiment, the adjusting display parameters of the original image to make adjusted display parameter satisfy a value condition at step 103 may include: detecting an imaging area of the object in the original image; and adjusting the size of the original image to the size of the imaging area of the object.

The size is taken as the display parameter of an original image, and the size of the imaging area of the object is taken as the value condition. Adjusting the size of the original images to make the imaging area of the object have a consistent size is to make the size of the object in the original images constant. In an examples where an original image is an eye fundus picture and an object in the original image is an eyeball, the imaging area of the object refers to the imaging area of the eyeball, and by adjusting the size of the original eye fundus picture, the eyeballs in different original eye fundus pictures have the same size, such as 300 pixels. The size of the original image is adjusted so that the size of the imaging area of the object is consistent facilitates unifying the size of the object in the original images to avoid the influence of a too-small size of the object on the training accuracy of subsequent training of the neural network model and the training error caused by different sizes of the object.

In yet another embodiment, adjusting a display parameter of the original image to have the adjusted display parameter meet a value condition at step 103 may include: applying image enhancement to each color channel of the original image to conform to a required recognizability degree of the original image.

Image enhancement refers to improving the visual effect of an image by enhancing useful information in an image. A color channel refers to a channel which stores image color information. Each image has one or multiple color channels, and each color channel stores information of color elements in the image. The colors in all the color channels are superposed and mixed to generate the colors of pixels in the image. The recognizability degree refers to the clarity and recognizability degree of the image. The image enhancement may include the following methods. According to the first method, the contrast ratio may be increased, and a linear function may be used to transform the gray-sale value of the image. According to a second method, Gamma correction may be applied, and a nonlinear function (exponential function) may be adopted to transform the gray-sale value of the image. According to the third method, the histogram equalization may be applied, the histogram of an original image may be transformed into an image with a probability density of 1 (under an ideal condition) using an integral probability density function, the contrast may be improved, and the whole image is transformed according to a bright area by expanding certain area through the histogram equalization. According to the fourth method, the histogram specification may be applied, the histogram of the original image may be transformed into a specified form of histogram according to the result of the histogram equalization, and the histogram of the target image may be determined according to the histogram of the original image using a multi-Gaussian function. According to the fifth method, the homomorphic filter may be used, the gray-scale image f (x, y) of the image may be regarded as consisting of an incident light component i (x, y) and a reflected light component r (x, y), where f (x, y)=i (x, y) * r (x, y), the incident light is relatively uniform, varies little with spatial position, and occupies a low-frequency spectrum segment, and the reflected light includes reflected lights with diverse intensities due to the differences in nature and structural characteristics of objects, varies drastically with spatial positions, and occupies a high-frequency spectrum segment, which is designed on the basis of the principle that an image is formed by a combination of an illumination spectrum and a reflection spectrum. According to the sixth method, RGB images may be transformed into images in other spaces based on a color image enhancement method of HSV space, such as transforming images in RGB space into images in HSV space, where HSV respectively refers to hue, saturation and brightness, and the image may be enhanced by adjusting the three components of HSV

Through the first method to the third method, an image area in concern, i.e. an object imaging area where features are to be extracted, may be expanded, and an area not in concern, i.e. a background area where no features are to be extracted, may be compressed, to achieve an image enhancement effect. The first method to the fifth method are applicable for performing image enhancement on gray-scale images, and the sixth method is applicable for performing image enhancement on color images.

In an embodiment of the present application, the display parameter of an image is color channel, the value condition is a preset recognizability degree required to be met, and enhancement processing is applied to each color channel of an original image according to an image enhancement method to emphasize the overall features or local features of the image, make the unclear original image clear and emphasize the features to be extracted, and enlarge the differences between different features in the image. When enhancement processing is applied to each color channel of the original image according to an image enhancement method, one or multiple of the first to the sixth image enhancement methods may be selected and combined according to needs. For example, in an embodiment where an eye fundus image is taken as an example of the original image, in order to highlight the optic-disc to optic-cup ratio in the eye fundus image, the procedure of applying image enhancement to each color channel of the original image to conform to the recognizability degree required to be met by the original image may include: processing each color channel of each pixel in the original image according to steps S1-S2: S1, multiplying the color value of each color channel of each pixel by a preset value; and S2, adding a preset proportion of a gray-scale value to each pixel. The distinction degree between the pixels can be increased and the training speed of using the image for training a neural network model can be increased by acquiring the difference between the color value of each color channel of each pixel and a preset pixel area range and multiplying the difference by a preset value. The value range of the preset value may be [1-8], preferably 3; and the value of the preset proportion of the gray-scale value may be 58%~59%, e.g., 150. Through the steps S1~S2, by applying image enhancement processing to each color channel of the original image, features not to be extracted may be inhibited, and image quality can be improved, information quantity is enlarged, and interpretation and recognition effects of the original image can be enhanced.

In yet another embodiment, the procedure of adjusting the display parameter of the original image to have the adjusted display parameters meet a value condition at step 103 may include: cropping a non-imaging area of an object in the original image; and adjusting the cropped image to conform to the preset size.

Cropping refers to the act of obtaining the desired part from the entire image. In an example where the display parameter of the original image is size and the value condition is the overall image size conforming to the preset size, the non-imaging area is cropped off from the original image, so that the size of the original image becomes consistent with the preset size. In an example where the original image is an eye fundus picture and the object in the original image is an eyeball, the imaging area of the object is an imaging area of the eyeball, and a non-imaging area excluding the eyeball in the original eye fundus picture is cropped off with the eyeball as the center to adjust the overall size of the cropped original eye fundus picture to be consistent with the preset size. As such, the size of the object imaging area in the original image can be unified conveniently, the area of null areas in the original image can be reduced, and the training speed and accuracy of using the original image in training the neural network model can be improved. In an example where the original image is an eye fundus picture and the object in the original image is optic disc and optic cup, an imaging area of the object is an imaging portion of an eyeball optic disc and cup, and cropping is carried out by taking the optic disc and cup as the center to make the size of the optic disc and cup in the cropped original eye fundus picture is consistent with a preset size.

In another embodiment, the procedure of transforming the display parameter of the original image to make the distribution of the display parameter conforms to a required distribution condition to obtain a new image at step 105 may include: determining an image conversion condition for transforming the display parameter of the original image according to a value space of the display parameter of at least one category of the image and a distribution condition in the value space; and transforming the display parameter of the original image according to the image conversion condition to obtain a new image.

The display parameter of the at least one category of an image may refer to at least one of orientation, size, brightness, contrast, aspect ratio, resolution, and color of the image. The value space refers to the value range corresponding to the display parameters of different categories. By setting the value space according to the display parameters of different categories and setting the image conversion condition for the image according to the value space and the distribution conditions of different display parameters, more new images can be obtained for use in training the neural network model.

In an example where the category of the display parameter is the orientation of the image, the corresponding value space is horizontal rotation or 90-degree rotation, and the distribution condition is uniform distribution, the procedure of transforming the display parameter of the original image to obtain a new image according to the distribution condition required to be met by the distribution of the display parameter at step 105 may include: rotating the original image horizontally or 90-degree with a probability of fifty percent with the distribution condition of the orientation of the original image in a round of training data is uniform distribution, to obtain a new image to form a new round or multiple rounds of training data.

In an example where the category of the display parameter is the aspect ratio of the image, the corresponding value space is the range of cropping ratio in length or width, and the distribution condition is random distribution, the procedure of transforming the display parameter of the original image to obtain a new image according to the distribution condition required to be met by the distribution of the display parameter at step 105 may include: cropping the length or width of the original image by a cropping ratio within the range of cropping ratio with the distribution condition of the aspect ratio of the original image in a round of training data is random distribution, to obtain a new image for a new round or multiple rounds of training data. In an example, the original image may be randomly cropped by 0%~15% respectively in length and width based on the initial length and width.

In an example where the category of the display parameter is the brightness of the image, the corresponding value space is the brightness varying value range of the image, and the distribution condition is random distribution, the procedure of transforming the display parameter of the original image to obtain a new image according to the distribution condition required to be met by the distribution of the display parameter at step 105 may include: randomly increasing the brightness of the original image by a value within the brightness varying value range with the distribution condition of the brightness varying value range of the adjustment of the brightness of the original image in one round of training data is random distribution, to obtain a new image for a new round or multiple rounds of training data. In an example, the brightness of the original image may be added by any brightness value within the brightness value varying range from minus 10 to 10 candelas per square meter (cd/m2).

In an example where the category of the display parameter is the brightness of the image, the corresponding value space is the brightness varying ratio range of the image, and the distribution condition is random distribution, the procedure of transforming the display parameter of the original image to obtain a new image according to the distribution condition required to be met by the distribution of the display parameter at step 105 may include: randomly increasing the brightness of the original image by a ratio within the brightness varying ratio range with the distribution condition of the brightness varying ratio range of the adjustment of the brightness of the original image in one round of training data is random distribution, to obtain a new image for a new round or multiple rounds of training data. In an example, the brightness of the original image may be adjusted to 75%~125% of the initial brightness.

In an example where the category of the display parameter is the contrast of the image, the corresponding value space is the contrast varying ratio range of the image, and the distribution condition is random distribution, the procedure of transforming the display parameter of the original image to obtain a new image according to the distribution condition required to be met by the distribution of the display parameter at step 105 may include: randomly increasing the contrast of the original image by a ratio within the contrast varying ratio range with the distribution condition of the contrast varying ratio range of the adjustment of the contrast of the original image in one round of training data is random distribution, to obtain a new image for a new round or multiple rounds of training data. In an example, the contrast of the original image may be adjusted to 75%~125% of the initial contrast.

In an example where the category of the display parameter is the size of the image, the corresponding value space is the scaling ratio range of the image, and the distribution condition is random distribution, the procedure of transforming the display parameter of the original image to obtain a new image according to the distribution condition required to be met by the distribution of the display parameter at step 105 may include: randomly scaling the original image by a ratio within the scaling ratio range with the distribution condition of the scaling ratio range of the original image in one round of training data is random distribution, to obtain a new image for a new round or multiple rounds of training data. In an example, the original image may be scaled to 90%~110% of the original size.

In an example where the category of the display parameter is the orientation of the image, the corresponding value space is the rotation angle range of the image, and the distribution condition is random distribution, the procedure of transforming the display parameter of the original image to obtain a new image according to the distribution condition required to be met by the distribution of the display parameter at step 105 may include: randomly rotating the original image by an angle within the rotation angle range with the distribution condition of the rotation angle range of the original image in one round of training data is random distribution, to obtain a new image for a new round or multiple rounds of training data. In an example, the original image may be randomly rotated by any angle within the rotation angle range based on the initial orientation, and the rotation angle range is between minus 180 degrees and 180 degrees.

It can be understood that in the procedure of transforming the display parameter of the original image to obtain a new image according to the distribution conditions required to be met by the distribution of the display parameter, the category of the display parameter is not limited to the categories given in the above examples. When the original image is transformed to obtain the new image, one or a combination of multiple of the technical methods for transforming the image in the above examples may be used. Each round of training data may be randomly processed through any one of the following amplification operations: 1. horizontally rotating the training image at a preset probability; 2. randomly cropping the original image in width and height by a value in a first ratio range; 3. randomly adding or subtracting the brightness value of the original image by a value in a second range value; 4. randomly multiplying or dividing the brightness value of the original image by a value in a third ratio range; 5. randomly multiplying or dividing the contrast value of the original image by a value in a fourth ratio range; 6. randomly scaling the width and the height of the original image by a value in a fifth ratio range; 7. randomly rotating the original image by a value in a sixth ratio range. By increasing the training data in each round in real time, more rounds of effective training data can be obtained for training the neural network model.

In an embodiment, the procedure of training the neural network model may include: initializing the neural network model; initializing a distance calculation layer, a full connection layer and a classification layer which are sequentially connected to the neural network model, to obtain a combined neural network model for classifying the prediction image, and inputting the image in the training set and the corresponding category into the neural network model for iterative training until a loss function of the neural network model meets a convergence condition.

Initializing the neural network model refers to initializing parameters of any existing neural network model to build an initial neural network model; combining the adjusted original images and the new images to construct a training set to train the neural network model, and initializing a distance calculation layer, a full connection layer and a classification layer which are sequentially connected to the neural network model to build the initial combined neural network model. The initializing the parameters of the neural network model mainly include: initializing connection parameters between layers in the neural network model, i.e., the weights of edges in the neural network. In an example, initializing the parameters of the neural network model may also include initializing the number of iterations in the neural network model, the size of batch processing, the learning rate, the total number of layers in the neural network, etc.

In an embodiment of the present application, the initial neural network model may be a neural network model pre-trained using a pre-trained image dataset, such as CNN models including Inception V1, Inception V2, Inception V3 and Inception V4 pre-trained based on pre-trained image datasets including ImageNet, resNet, VGG, and DenseNet. The initial neural network model used in initializing the neural network model may, of course, not be limited thereto, and may also be any existing neural network model pre-trained using other pre-trained image datasets, or an initial neural network model built utilizing parameters of a neural network model pre-trained using the pre-trained image dataset.

The initial combined neural network model is built using the initial neural network model. In an example, the initial combined neural network model may be constructed by sequentially connecting the distance calculation layer, the full connection layer and the classification layer to the initial neural network model. The distance calculation layer refers to a layer for measuring distance between features of different images in a neural network model. The distance calculation layer calculates the distance between the extracted features of different images using a configured distance measurement method, to evaluate the correlation degree of the features. The main distance measurement methods include L1 distance (Manhattan distance), L2 distance (Euclidean distance), L $\infty$ distance (Chebyshev Distance) and the like. $X_{ik}$ represents the K-th first feature, $X_{jk}$ represents the K-th second feature, $d_{ij}$ represents the distance between the first feature and the second feature, n represents the total number of the features, the formula of calculating the

L1 distance is:
$$d_{ij} = \sum_{k=1}^{n} \left( \left| X_{ik} - X_{jk} \right| \right)$$
, the formula for calculating the L2 distance is:

$$d_{ij} = \sqrt{\sum_{k=1}^{n} \left( X_{ik} - X_{jk} \right)^2}$$
; the formula for calculating L $\infty$ distance is: $d_{ij} = \max_k(|X_{ik} - X_{jk}|)$. It should be noted that the distance measurement method used in the distance calculation layer in the neural network model in embodiments of the present application is not limited to the above methods, and any other distance measurement method available for calculating the distance between features of different images can be used. The full connection layer is connected with all nodes in the distance calculation layer, synthesizes the distance vector features output by the distance calculation layer, and performs dimension reduction. The classification layer refers to a layer which determines the category by determining the similarity between the features extracted from the prediction image and the features extracted from the reference image labeled with the category based on the distance calculation result of the extracted features. It can be understood that the total number of categories enabled by the activation function used in the classification layer corresponds to the number of inputs of the training set for training the initial combined neural network model, i.e., corresponding to the combination manner for combining the adjusted original images and the new images to construct the training set. In the embodiment, taking the training set constructed using combinations of image pairs as an example, the input correspondingly formed in the training set for training the initial combined neural network model is two, and the classification layer refers to a layer which uses the sigmoid function as the activation function to realize binary classification.

The images in the training set and corresponding categories are input into the initial combined neural network model for iterative training until a loss function of the combined neural network model meets a convergence condition, so as to obtain a final combined neural network model for classifying images to be predicted. In the embodiment of obtaining the combined neural network model, the procedure of initializing the distance calculation layer, the full connection layer and the classification layer which are sequentially connected to the initial neural network model to obtain the initial combined neural network model for classifying the prediction image may include: connecting the average pooling layer of the initial neural network model sequentially to the distance calculation layer, the full connection layer and the classification layer to construct the initial combined neural network model.

In the process of training the neural network model, after initializing the neural network model, the method may also include loading a training set and training model parameters. Loading a training set refers to inputting a training set constructed using the adjusted original images and the new images together with categories of an object into an initial combined neural network model for iterative training, calculating the costs using forward propagation, label information and a cost function, updating the parameters in each layer using back propagation cost function gradients to adjust the weights in the initial combined neural network model until the loss function of the neural network model meets a convergence condition, to obtain a final combined neural network model. The initial neural network model refers to a neural network model pre-trained using a pre-trained image data set. The initial combined neural network model refers to a neural network model before training which is constructed using the number of inputs formed by a training set constructed by combining the adjusted original images and the new images and the initial combined neural network model. The final combined neural network model refers to the neural network model after training. Thus, the construction of the neural network model can be greatly simplified, the training method is simpler, and stable classification accuracy can be conveniently and quickly obtained by extracting the characteristics of the features of the prediction image using the intermediate layer of the neural network model pre-trained using the pre-trained image data set and constructing the combined neural network model for classifying the prediction image based on the neural network model pre-trained using the pre-trained image data set.

In another embodiment, the image classification method may also include: obtaining the loss function of the neural network model according to a cross-entropy cost function.

Loss function, also referred to as cost function, is the objective function of neural network optimization. The process of training or optimizing a neural network is the process of minimizing the loss function. The smaller the value of the loss function is, the closer the corresponding predicted result is to the real result. In an embodiment, the loss function of the neural network model is formed according to a cross-entropy cost function. When the actual output value is closer to the desired output value, the cost function is closer to zero. When the sigmoid function is used as activation function of a neuron, the training speed can be increased by using the cross-entropy cost function as the loss function of neural network model.

In an embodiment,, the procedure of inputting a prediction image and a reference image with labeled category of an object into the neural network model based on the trained neural network model, and making a judgment with respect to the category of the object in the prediction image at step 109 may include:

extracting image features from a prediction image and image features from a reference image labeled with the category of an object utilizing a combined neural network model in the combined neural network model, the reference image is an image in the training set;
determining a distance vector of the image features of the prediction image and the reference image, and applying down-sampling to the distance vector; and
mapping the distance vector after the down-sampling onto a pre-defined value space to obtain the probability that the prediction image belongs to the labeled category of the object in the reference image.

A reference image labeled with the category of an object refers to an image which includes the same object with the prediction image and is labeled with the category of the object. In an embodiment, a reference image refers to an image used in training the neural network model in the training set, and may be an adjusted original image or a new image in an embodiment of the present application. It can be understood that the reference image may also be other images that may meet the above requirements, such as am image which is newly added into the pre-trained image data set and labeled with a category. For a combined neural network model, the procedure of extracting image features using a neural network model trained using a pre-trained image data set may include: extracting image features from a prediction image and image features from a reference image labeled with the category of an object. The distance between the image features of the prediction image and the image feature of the reference image is calculated using the distance calculation layer to obtain a distance vector. The obtained distance vector of the extracted image features is down-sampled using the full connection layer. The down-sampled feature, i.e., the distance vector with reduced dimensions, is inputted into a classification layer which uses a sigmoid function as the activation function, and is mapped to a pre-defined value space (0, 1) using the classification layer to obtain the probability that the prediction image belongs to the labeled category of the object in the reference image, so as to obtain the classification result of the prediction image.

Referring to FIG. 7 which illustrates an example where the original image is an eye fundus image, and a combined neural network model is constructed and trained based on an initial neural network model which is an Inception V3 pre-trained using a pre-trained image data set ImageNet. The image classification method of the embodiment of the present application is as follows.

At S11, an original eye fundus image and a category of an object in the original eye fundus image may be obtained. In an example, the category of the object may be one of four categories for assisting identification of different degrees of retinopathy, i.e., normal, early stage, advanced stage (mid-term) and terminal stage.

At S12, the display parameter of the original eye fundus image may be adjusted to meet a value condition to obtain an adjusted original eye fundus image. In an example, the display parameter of the original eye fundus image may be adjusted to meet the value condition by scaling the original fundus image to have the eyeball in the original eye fundus image have the same radius, such as 300 pixels; subtracting a preset pixel value in a preset pixel area range from each channel of each pixel in the original eye fundus image, multiplying each pixel value by a preset constant value, and adding a preset proportional gray value to each pixel value; cropping the null non-imaging area off the original eye fundus image; scaling the original eye fundus image to a preset size, such as 299 pixels in width and 299 pixels in height; as such, portions of the preset imaging structure in the original image, e.g., blood vessels and bleeding points in the original eye fundus image, can be emphasized. In another example, adjusting the display parameter of the original eye fundus image to meet a value condition may include scaling the original eye fundus image so that the original eye fundus image has the same size, such as 589 pixels in width and 589 pixels in height; detecting the area which includes the optic disc and cup in the original eye fundus image, cropping, with the center being the center of the optic disc and cup to remove the null non-imaging area to resize the original eye fundus image to a proper size, such as 299 pixels in width and 299 pixels in height; applying enhancement on the image, subtracting a preset pixel value within a preset pixel area range from each channel of each pixel in the original eye fundus image, multiplying each pixel value by a preset constant value, and adding a preset proportional gray value to each pixel value. For example, each channel of each pixel in the original eye fundus image may be processed as follows: $g(i, j) = \alpha * f(i, j) + \beta$, where i and j are the positions of the pixel, $f(i, j)$ is the values of the pixel before processing, and $g(i, j)$ is the value of the pixel after processing, $\alpha$ and $\beta$ are preset parameter values respectively, e.g., the value of $\alpha$ may be 3 and the value of $\beta$ may be 150. As such, the contrast of different preset imaging structures in the original image, such as the disc-to-cup ratio of the original eye fundus image, may be emphasized.

At S13, the display parameter of the original eye fundus image may be transformed to obtain a new eye fundus image according to the distribution condition required to be met by the distribution of the display parameter. In an example, according to the distribution condition required to be met by the distribution of the display parameters, the method of transforming the display parameter of the original eye fundus image may includes at least one of the following: horizontally rotating the original eye fundus image or the new eye fundus image according to a preset probability value; randomly cropping the width and the height of the original eye fundus image by a value in a first proportion range; randomly adding or subtracting a value in a second range from the brightness of the original eye fundus image; randomly multiplying or dividing the brightness of the original eye fundus image by a value within a third proportional range; randomly multiplying or dividing the contrast of the original eye fundus image by a value within a fourth proportion range; randomly scaling the width and the height of the original eye fundus image by a value within a fifth scale range; randomly rotating the original eye fundus image by a value within a sixth proportion range.

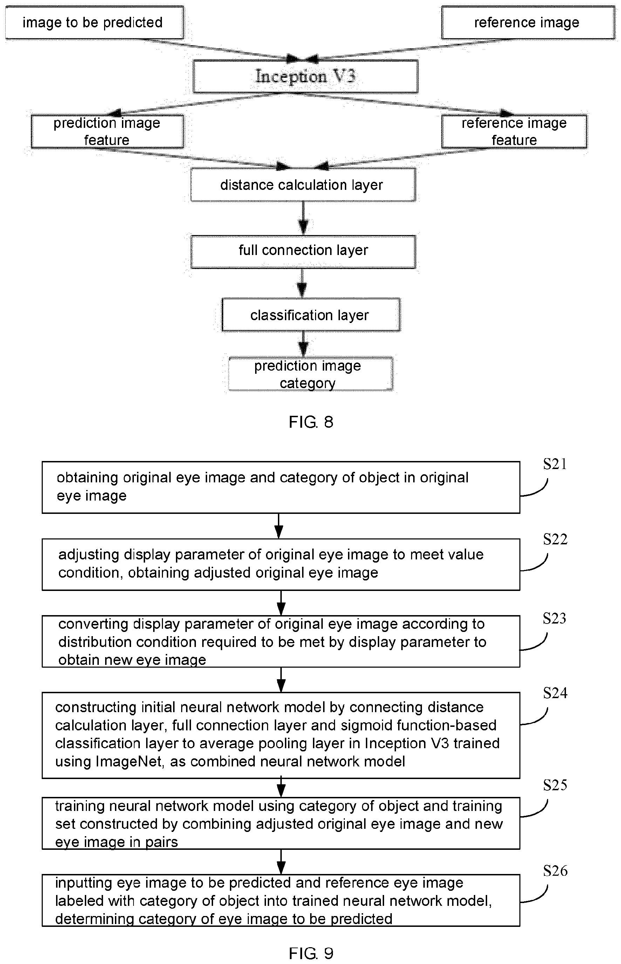

At S14, an average pooling layer in the Inception V3 trained using the ImageNet may be connected sequentially to a distance calculation layer, a full connection layer, and a classification layer using a sigmoid function to construct an initial neural network model. As shown in FIG. 8, the initial neural network model is a combined neural network model. According to the above embodiments of the present application, Inception V3 may be replaced by any other existing neural network model. A combined neural network model can be constructed by connecting any existing neural network model to the distance calculation layer, the full connection layer and the classification layer. The method of constructing the neural network model before training by utilizing any existing neural network model to extract image features can greatly simplify the construction of the neural network model while ensuring the classification accuracy.

At S15, a neural network model may be trained using a training set constructed by the combination of the adjusted original eye fundus images, the new eye fundus images and the categories of the object in the images. In an example, different batches of training sets constructed using combinations of pairs of the adjusted original eye fundus images and the new eye fundus images may be inputted into an initial neural network model for training for a plurality of iteration until a loss function of the neural network model meets a convergence condition, to obtain a trained neural network model.

At S16, the eye fundus prediction image and the reference image labeled with the category of the object may be inputted into a trained neural network model to determine the category of the prediction image. In an example, the eye fundus prediction image and the reference image labeled with the category of the object may be respectively received, through InceptionV3, by the combined neural network model as inputs, image features are extracted by an intermediate layer of ReceptionV3, and two feature vectors having the same dimensions, such as 2048 dimensions, may be generated by an average pooling layer. A distance vector, such as a 2048-dimensional distance vector, may be obtained by calculating the distance between two feature vectors of the same dimensions at the distance calculation layer. A distance vector with reduced dimensions, such as a 512 dimensional distance vector, may be obtained by down-sampling the distance vector at the full connection layer. The distance vector with reduced dimensions may be inputted into a classification layer whose activation function is the sigmoid function, and mapped to a predefined value space (0, 1) by the classification layer to obtain the probability that the prediction image belongs to the labeled category of the object in the reference image, therefore a corresponding classification result is obtained. The reference image may be an image labeled with one of four categories, i.e., normal, early stage, advanced stage (mid-term), or terminal stage, respectively, so that the category of the prediction image may be determined to be normal, early stage, advanced stage(mid-term), or terminal stage.

The above image classification method is described taking an eye fundus image as an example of the original image. Since the eyes is one of the most important organs of a human body, information acquired by a person from the outside is mainly obtained through the eyes,eye diseases may impact the vision or even blindness and disability. The impacted vision surely undermines the quality of life of patients. Nonpalpable eye diseases such as glaucoma and diabetic retinopathy present no symptoms of vision changes at the early stage, and eye fundus photography is an effective method to detect the nonpalpable eye diseases at the early stage. The eye fundus photography is a widely used fundus examination in recent years. It uses a specialized equipment, such as a digital camera, connected with an ophthalmoscope to display the image of eye fundus on a computer device. The image may be printed and stored in medical records. The images obtained before and after treatment may also be used for comparison. The image can objectively record the morphological changes of eye fundus retina, and has good objectivity, repeatability and comparability. At present, the eye fundus image is used for eye fundus screening. An ophthalmologist in a film reading center performs film reading and grading on the eye fundus images, so that patients may be treated early to slow the progress of the disease, to divert from disease treatment to disease prevention. However, eye fundus screening programs based on eye fundus photography typically produce a large number of eye fundus photographs that need to be graded. Since most of the eye fundus photographs are normal, most of the ophthalmologist's grading work time is spent on normal eye fundus photographs without any signs of eye diseases, which not only make the accuracy of the classification rely on the experiences of the ophthalmologist reading the film, but also cause the classification efficiency to be very low. According to the image classification method provided by the embodiments of the present application, the eye fundus image may be efficiently, accurately and automatically classified. The method is simple to use, the judgment speed is fast, and accurate judgment results may be obtained rapidly even without professional capability of identifying eye fundus images. Therefore, the classification efficiency of the eye fundus pictures can be improved conveniently, the workload of professionals can be greatly reduced, the judgment results do not rely on the capabilities of individuals, and the classification accuracy is high with good stability.

In the above image classification method, by adjusting the original eye fundus image and transforming the display parameters of the original eye fundus image according to the distribution conditions required to be met by the distribution of the display parameters of the original eye fundus image to obtain a new eye fundus image; by using a training set constructed by combining the original eye fundus images and the new images for training the neural network model, the training set can be enlarged by multiple times using the combinations for training the neural network model even when there is limited number of training samples, thus sufficient classification dimensions can be obtained and classification accuracy can be ensured. Taking glaucoma classification as an example, when the number of glaucoma fundus images labeled by profession may be very small and the number of existing glaucoma fundus images labeled in a pretrained image data set is not large, in accordance with the image classification method provided by the embodiment of the present application, the training difficulty can be greatly reduced, the classification dimensions are not limited to normal and abnormal but are extended to the classification and recognition of different severity levels under the abnormal situations, the classification accuracy can be ensured, and the image classification method has good stability.

Referring to FIG. 9 which illustrates an example where the original image is an eye image, and a combined neural network model is constructed and trained based on an initial neural network model which is an Inception V3 pre-trained using a pre-trained image data set ImageNet. The image classification method of the embodiment of the present application is as follows.

In S21, an original eye image and a category of an object in the original eye image may be obtained. In an example, the object in the original eye image is an eye, and the categories of the object may include five categories of different shapes of the eye: upturning eye, triangle eye, long eye, narrow eye and round eye.

At S22, the display parameter of the original eye image may be adjusted to meet a value condition to obtain an adjusted original eye image. In an example, the display parameter of the original eye image may be adjusted to meet the value condition by scaling the original eye image to have the original eye image have the same size with the center of the image being the center of the eye, such as 300 pixels; multiplying each pixel value in the original eye image by a preset constant value, adding a preset proportional gray value to each pixel value; cropping the null non-imaging area off the original eye image; scaling the original eye fundus image to a preset size, such as 299 pixels in width and 299 pixels in height; as such, portions of the preset imaging structure in the original image, e.g., the eye contour portion in the original eye fundus image, can be emphasized.

At S23, the display parameter of the original eye image may be transformed to obtain a new eye image according to the distribution condition required to be met by the distribution of the display parameter. In an example, according to the distribution condition required to be met by the distribution of the display parameters, the method of transforming the display parameter of the original eye image may includes at least one of the following: horizontally rotating the original eye image or the new eye image according to a preset probability value; randomly cropping the width and the height of the original eye image by a value in a first proportion range; randomly adding or subtracting a value in a second range from the brightness of the original eye image; randomly multiplying or dividing the brightness of the original eye image by a value within a third proportional range; randomly multiplying or dividing the contrast of the original eye image by a value within a fourth proportion range; randomly scaling the width and the height of the original eye image by a value within a fifth scale range; randomly rotating the original eye image by a value within a sixth proportion range.

At S24, an average pooling layer in the Inception V3 trained using the ImageNet may be connected sequentially to a distance calculation layer, a full connection layer, and a classification layer to construct an initial neural network model which may be the combined neural network model as shown in FIG. 8. InceptionV3 may be replaced by any other existing neural network model. A combined neural network model can be constructed by connecting any existing neural network model to the distance calculation layer, the full connection layer and the classification layer. The method of constructing the neural network model before training by utlizing any existing neural network model to extract image features can greatly simplify the construction of the neural network model while ensuring the classification accuracy.

At S25, a neural network model may be trained using a training set constructed by the combination of the adjusted original eye images, the new eye images and the categories of the object in the images. Different batches of training sets constructed using combinations of pairs of the adjusted original eye images and the new eye images may be inputted into an initial neural network model for training for a plurality of iteration until a loss function of the neural network model meets a convergence condition, to obtain a trained neural network model.

At S26, the eye prediction image and the reference image labeled with the category of the object may be inputted into a trained neural network model to determine the category of the prediction image. In an example, the eye rediction image and the reference image labeled with the category of the object may be respectively received, through InceptionV3, by the combined neural network model as inputs, image features are extracted by an intermediate layer of ReceptionV3, and two feature vectors having the same dimensions, such as 2048 dimensions, may be generated by an average pooling layer. A distance vector, such as a 2048-dimensional distance vector, may be obtained by calculating the distance between two feature vectors of the same dimensions at the distance calculation layer. A distance vector with reduced dimensions, such as a 512 dimensional distance vector, may be obtained by down-sampling the distance vector at the full connection layer. The distance vector with reduced dimensions may be inputted into a classification layer whose activation function is the sigmoid function, and mapped to a pre-defined value space (0, 1) by the classification layer to obtain the probability that the prediction eye image belongs to the labeled category of the object in the reference eye image, therefore a corresponding classification result is obtained. The reference eye images may be eye images labeled with four categories including upturning eyes, triangle eyes, long eyes, narrow eyes and round eyes, thus the category of the prediction image may be determined to be upturning eyes, triangle eyes, long eyes, narrow eyes or round eyes.

The above image classification method takes an eye image as an example of the original image. The image classification method of the embodiment of the present application is used for identifying the eyes in the eye image are upturning eyes, triangle eyes, long eyes, narrow eyes or round eyes. The identification of the eye shape in an eye image of the embodiment is an example that the classification dimension of the object in the image may be exterior characteristics presented in appearance of the object. It can be understood that according to the technical concept of the embodiments of the present application, the original image may also be other images that include other objects for classification, and the number of the images labeled with the category is very small. By adjusting the original image, transforming the display parameter of the original image to obtain a new image according to the distribution conditions required to be met by the distribution of the display parameter of the original image; and by constructing a training set for training the neural network model using combinations of the original images and the new images, the training set can be enlarged by multiple times by using the combinations to train the neural network model even when the number of training samples is very small, therefore sufficient classification dimensions can be obtained and classification accuracy can be ensured.

It should be understood that, although the various steps in the flowcharts of FIGs. 2, 7 and 9 are illustrated sequentially in the order indicated by the arrows, the steps are not necessarily performed in the order as indicated by the arrows. Unless specifically stated otherwise herein, there is no strict limitation of the order of the steps being performed, and the steps may be performed in other orders. Moreover, at least some of the steps in FIGs. 2, 7, and 9 may include multiple sub-steps or stages that are not necessarily performed at the same time, but may be performed at different time points. The execution order of the sub-steps or stages is not necessarily performed in sequence, and may be performed in turn or alternately with at least some of the other steps, or sub-steps or stages of the other steps.

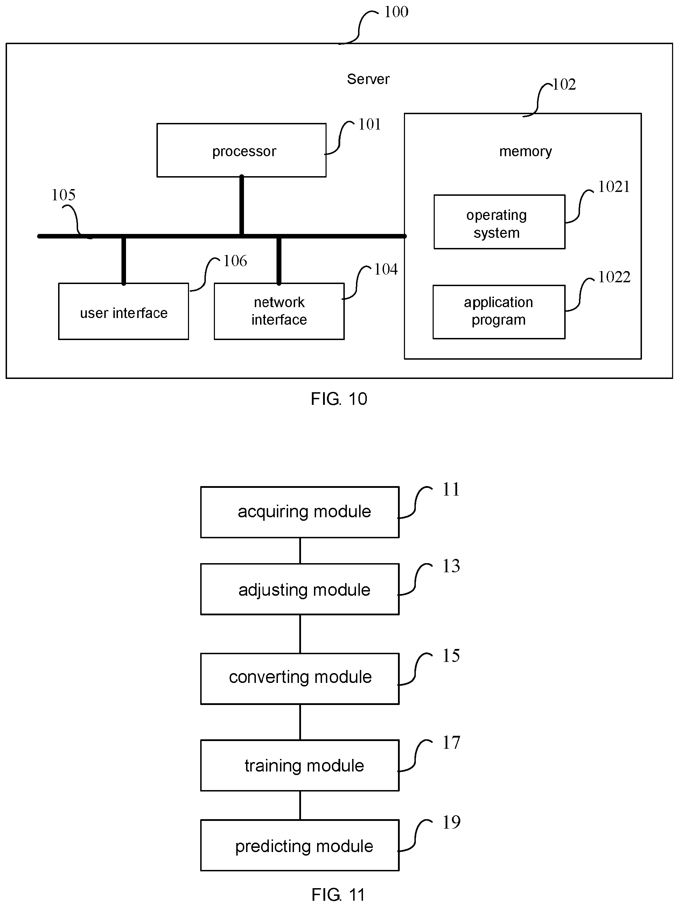

The image classification method of embodiments of the present application may be implemented by the terminal side device or a server side device. With respect to the hardware structure of the server, FIG. 10 is a schematic diagram of the hardware structure of a server 100 according to an embodiment of the present application. The server 100 may be a mobile phone, a computer device, a tablet device, a personal digital assistant, a medical device, or the like. The server 100 includes: at least one processor 101, a memory 102, at least one network interface 104, and a user interface 106. The memory 100 includes non-volatile storage medium and internal memory. The non-volatile storage medium of the server 100 stores an operating system and may also store computer-readable instructions executable by a processor to implement the image classification method. The internal memory may also store computer-readable instructions executable by a processor to implement the image classification method. The various components in the server are coupled together by a bus system 105. It can be understood that the bus system 105 may implement connection and communication between the components. Besides a data bus, the bus system 105 may also include a power bus, a control bus, and a status signal bus. However, for clarity of description, the various buses are labeled as bus system in FIG. 10.

The user interface 106 may include, a display, a keyboard, a mouse, a trackball, a click wheel, a key, a button, a touch pad, a touch screen, or the like.

It can be understood that the non-volatile memory may be a read-only memory (ROM) or a programmable read-only memory (PROM) serving as an external cache. By way of example not limitation, many types of RAM can be used, such as static random access memory (SRAM), or a synchronous static random access memory (SSRAM). The memories described in embodiments of the present application may include, but are not limited to, the above or any other suitable types of memories.

The memory 102 in embodiments of the present application may store various categories of data to support the operation of server 100. Examples of such data may include: any executable program operating on the server 100 (such as an operating system 1021 and an application 1022), an original image; a new image transformed from the original image, or the like. The operating system 1021 may include various system programs, such as a framework layer, a core library layer, a driver layer, etc., for implementing various basic services and processing hardware-based tasks. The application 1022 may include various applications, such as a media player, a browser, etc., for implementing various application services. The image classification method of embodiments of the present application may be implemented in the application 1022.

The method of various embodiments of the present application may be applied to, or implemented by, the processor 101. The processor 101 may be an integrated circuit chip having signal processing capabilities. In the implementation process, various steps of the above method may be performed by a hardware integrated logic circuit of or software instruction in the processor 101. The processor 101 may be a general purpose processor, a digital signal processor (DSP), or other programmable logic device, discrete gates or transistor logic device, discrete hardware components, etc. The processor 101 may implement or execute the various methods, steps, and logic block diagrams disclosed in embodiments of the present application. The general purpose processor 101 may be a microprocessor or any conventional processor etc. In combination with the steps of the image classification method of various embodiments of the present application, the steps may be directly implemented by a hardware decoding processor or by a combination of hardware and software modules in the decoding processor. A software module may reside in the storage medium, the storage medium resides in a memory, and the processor reads the information in the memory and completes the steps of the above method by combining with the hardware.

In an example, the server 100 may be implemented by one or multiple application specific integrated circuits (ASICs), DSPs, programmable logic devices (PLDs) and complex programmable logic devices (CPLDs) for executing the above method.

In an example, FIG. 11 is a schematic diagram of the structure of a server according to an embodiment. All or some of the modules described below may be implemented by software, hardware, or a combination thereof. Referring to FIG. 11, the server may include: an acquiring module 11 for acquiring an original image and a category of an object in the original image; an adjusting module 13 for adjusting a display parameter of the original image to meet a value condition; a transforming module 15 for transforming the display parameter of the original image according to a distribution condition which is to be met by the distribution of the display parameter to obtain a new image; a training module 17 for training a neural network model using a training set constructed by combining the adjusted original image and the new image and the category of the object; and a predicting module 19 for inputting a prediction image and a reference image labeled with a category of the object into the trained neural network model, and determining the category of the object in the prediction image.

In an embodiment, the adjusting module 13 may include a detecting unit and an adjusting unit. The detecting unit may detect an imaging area of an object in the original image. The adjusting unit may adjust the size of the original image to be consistent with the size of the imaging area of the object.

In another embodiment, the adjusting module 13 may include an enhancing unit for applying image enhancement to each color channel of the original image according to a required recognizability degree of the original image.

In yet another embodiment, the adjusting module 13 may include a cropping unit and an adjusting unit. The cropping unit may crop a non-imaging area of an object in the original image. The adjusting unit may adjust the size of the cropped image to a preset size.

In an embodiment, the transforming module 15 may include a determining unit and a transforming unit. The determining unit may determine an image conversion condition for transforming the display parameter of the original image according to a value space of the display parameter of at least one category of the image and a distribution met by the value space. The conversion unit may transform the display parameter of the original image to obtain a new image according to the image conversion condition.

In an embodiment, the training module may include an initializing unit and a combined module training unit. The training unit may initialize the neural network model, initialize a distance calculation layer, a full connection layer and a classification layer which are sequentially connected to the neural network model, to obtain a combined neural network model for classifying the prediction image. The combined module training unit may input the image in the training set and the corresponding category into the neural network model for iterative training until a loss function of the neural network model meets a convergence condition.

The server may also include a loss function determining module for obtaining a loss function of the neural network model according a cross entropy cost function.

In an embodiment, the predicting module may extract image features from an prediction image and image features from a reference image labeled with a category of an object using the combined neural network model in the combined neural network model, the reference image is an image from the training set; determine a distance vector of the image features of the prediction image and the image features of the reference image, and down-sample the distance vector; and map the distance vector after the down-sampling onto a pre-defined value space to obtain the probability that the prediction image belongs to the labeled category of the object in the reference image.

In an embodiment, the server may also includes a training set module for constructing a training set using combination of pairs of the adjusted original image and the new image.

It should be noted that, the division of the functional modules is used as an example to describe the server for image classification in the foregoing embodiments. In actual applications, the foregoing functions may be allocated to and implemented by different functional modules as required, that is, an internal structure of the server may be divided into different functional modules, so as to implement all or some of the functions described above. In addition, the above server and the image classification method of the embodiments belong to the same conceptive idea. Details have been described in the above, and will not be repeated herein.

Various embodiments of the present application also provide a non-volatile computer-readable storage medium storing computer-readable instructions executable by one or multiple processors to perform the steps of the image classification method in any of the embodiments described above. The readable storage medium may be memories such as a FRAM, an ROM, a PROM, an EPROM, an EEPROM, a Flash Memory, a magnetic surface memory, an optical disk, or a CD-ROM; and it may also be various devices including one or any combination of the above memories, such as mobile phones, computer devices, tablet devices, personal digital assistants, medical devices, etc.

Embodiments of the present application also provide a server including a processor and a memory for storing computer-readable instructions capable of running on the processor. When the computer-readable instructions are executed, the processor may execute an image classification method including: acquiring an original image and the category of an object in the original image; adjusting a display parameter of the original image to meet a value condition; transforming the display parameter of the original image according to a distribution condition required to be met by the distribution of the display parameter, to obtain a new image; training a neural network model using a training set constructed by combining the adjusted original image and the new image and the category of the object; and inputting an image to be predicted and a reference image labeled with the category of the object into the trained neural network model, and determining the category of the object in the image to be predicted.

In an embodiment, the computer-readable instructions are executable by the processor to adjust the display parameter of the original image to meet a value condition by detecting an imaging area of the object included in the original image, and adjusting the size of the original image to be consistent with the size of the imaging area of the object.

In an embodiment, the computer-readable instructions are executable by the processor to adjust the display parameter of the original image to meet a value condition by applying image enhancement to each color channel of the original image according to a recognizability degree required to be met by the original image.

In an embodiment, the computer-readable instructions are executable by the processor to adjust the display parameter of the original image to meet a value condition by cropping a non-imaging area of the object off the original image; and adjusting the size of the cropped image to the preset size.

In another embodiment, the computer-readable instructions are executable by the processor to transform the display parameter of the original image to obtain a new image according to the distribution condition required to be met by the distribution of the display parameter by determining an image conversion condition for transforming the display parameter of the original image according to a value space of the display parameter of at least one category of the image and a distribution condition in the value space; and transforming the display parameter of the original image according to the image conversion condition to obtain the new image.

In an embodiment, the computer-readable instructions are executable by the processor to train the neural network model by initializing the neural network model; initializing a distance calculation layer, a full connection layer and a classification layer which are sequentially connected to the neural network model, to obtain a combined neural network model for classifying the prediction image, and inputting the image from the training set and the corresponding category into the neural network model for iterative training until a loss function of the neural network model meets a convergence condition.

In an embodiment, the computer-readable instructions are executable by the processor to obtain the loss function of the neural network model according to the cross entropy cost function.

In an embodiment, the computer-readable instructions are executable by the processor to input the prediction image and the reference image labeled with the category of the object into the neural network model based on the trained neural network model and determining the category of the object in the prediction image by extracting image features from the prediction image and image features from the reference images labeled with the category of the object in a combined neural network model utilizing the combined neural network model, the reference image is an image in the training set; determining a distance vector of the image features of the prediction image and the image features of the reference image, down-sampling the distance vector; and mapping the distance vector after the down-sampling onto a predefined value space to obtain the probability that the prediction image belongs to the labeled category of the object in the reference image.

In an embodiment, the computer-readable instructions are executable by the processor to: constructing the training set by combining the adjusted original image and the new image in pairs.

In another embodiment, the server may be the server 200 as shown in FIG. 1, and include a processor and a memory connected through a system bus. The memory stores executable program, the processor is configured to perform computations and control the operation of the server. When configured to execute the executable program stored in the memory, the processor can implement the image classification method according the embodiments of the application.

All or part of the above procedures may be implemented by hardware under control of a computer program. The computer program may be stored in a computer readable non-volatile storage medium. When being executed, the program causes the hardware to implement the procedures in the above methods. Any reference to memories, storage, databases, or other medium in the various embodiments provided herein may refer to a non-volatile storage device and/or a volatile storage device. The non-volatile memory may include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory. For illustration and not for limiting the scope, a RAM is available in many forms such as a static RAM (SRAM), a dynamic RAM (DRAM), a synchronous DRAM (SDRAM), a double data rate SDRAM (DDR SDRAM), an enhanced SDRAM (ESDRAM), a sync link DRAM (SLDRAM), a Rambus DRAM (RDRAM), a direct Memory bus dynamic RAM (DRDRAM), a memory bus dynamic RAM (RDRAM) and the like.

The various technical features of the above-mentioned embodiments may be combined in any way. In order to simplify the description, not all possible combinations of the various technical features of the above-mentioned embodiments are described. However, as long as there is no contradiction between these technical features, they should be considered as the scope of disclosure contained in this specification. The above embodiments are merely examples of implementation of the present invention, and may include unnecessary details, thus should not be used for limiting the protection scope of the present invention. It should clear for those skilled in the art that any modification and improvement within the principle of the invention should be covered in the protection scope of the invention. Therefore, the protection scope of the present invention should be determined by the extent defined by the indispensable technical features stated in the claims.

## Claims

1. An image classification method, performed by a server, comprising:

   acquiring (101) an original image and a category of an object in the original image;
   adjusting (103) a display parameter of the original image to meet a preset value range for the display parameter, wherein the display parameter comprises one of a resolution, size, color, orientation, brightness, contrast, and aspect ratio of the original image;
   transforming (105) the display parameter of the original image according to a distribution condition to obtain one or more new images, wherein the distribution condition is a preset condition to be met by the display parameter of the one or more new images and is one of a preset uniform distribution, a preset random distribution, and a preset Gaussian distribution;
   training (107) a neural network model using the category of the object in the original image and a training set constructed by combining the adjusted original image and the one or more new images, wherein before training the neural network model using the category of the object and the training set constructed by combining the adjusted original image and the one or more new images, the training set is constructed by combining the adjusted original image and the one or more new images in pairs; and
   inputting (109) an image to be predicted and a reference image labeled with a category of the object in the reference image into the neural network model after the neural network model is trained, and determining a category of the object in the image to be predicted.

2. The image classification method according to claim 1, wherein adjusting (103) the display parameter of the original image to make the adjusted display parameter meet the value condition comprises:

   detecting an imaging area including the object in the original image;
   adjusting the original image to make the original image have the same size as the imaging area of the object.

3. The image classification method according to claim 1, wherein adjusting (103) the display parameter of the original image to make the adjusted display parameter meet the value condition comprises:
applying image enhancement to each color channel of the original image to conform to a required clarity degree of the original image.

4. The image classification method according to claim 1, wherein adjusting (103) the display parameter of the original image to make the adjusted display parameter meet the value condition comprises:

   cropping a non-imaging area of the object off the original image; and
   adjusting a size of the original image after cropping to be a preset size.

5. The image classification method of claim 1, wherein transforming (105) the display parameter of the original image according to the distribution condition to be met by the distribution of the display parameter to obtain the new image comprises:

   determining an image conversion condition for transforming the display parameter of the original image according to a value space of the display parameter of at least one category of images and a distribution condition of the value space; and
   transforming the display parameter of the original image according to the image conversion condition to obtain the new image.

6. The image classification method of claim 1, wherein the training neural network model comprises:

   initializing a neural network model;
   initializing a distance calculation layer, a full connection layer and a classification layer which are sequentially connected to the neural network model to obtain a combined neural network model for classifying the image to be predicted, and inputting an image from the training set and a corresponding category into the neural network model for iterative training until a loss function of the neural network model meets a convergence condition.

7. The image classification method of claim 1, wherein inputting the image to be predicted and the reference image labeled with the category of the object into the neural network model after the neural network model is trained, and determining the category of the object in the image to be predicted comprises:

   extracting image features from the image to be predicted and image features from the reference image labeled with the category of the object utilizing a combined neural network model within the combined neural network model, the reference image is an image from the training set; determining a distance vector of the image features of the image to be predicted and the image features of the reference image, and down-sampling the distance vector; and

mapping the distance vector after the down-sampling onto a pre-defined value space to obtain a probability that the image to be predicted belongs to the labeled category of the object in the reference image.

8. A server (100), comprising a processor (101) and a memory (102) which stores computer readable instructions executable by the processor to:

acquiring an original image and a category of an object in the original image;

adjusting a display parameter of the original image to meet a preset value range for the display parameter, wherein the display parameter comprises one of a resolution, size, color, orientation, brightness, contrast, and aspect ratio of the original image;

transforming the display parameter of the original image according to a distribution condition to obtain one or more new images, wherein the distribution condition is a preset condition to be met by the display parameter of the one or more new images and is one of a preset uniform distribution, a preset random distribution, and a preset Gaussian distribution;

training a neural network model using the category of the object in the original image and a training set constructed by combining the adjusted original image and the one or more new images, wherein before training the neural network model using the category of the object and the training set constructed by combining the adjusted original image and the one or more new images, the training set is constructed by combining the adjusted original image and the one or more new images in pairs; and

inputting an image to be predicted and a reference image labeled with a category of the object into the neural network model after the neural network model is trained, and determining a category of the object in the image to be predicted.

9. The server of claim 8, wherein the computer-readable instructions are executable by the processor to adjust the display parameter of the original image to meet a value condition by: detecting an imaging area of the object in the original image, and adjusting a size of the original image to be consistent with a size of the imaging area of the object.

10. The server of claim 8, wherein the computer-readable instructions are executable by the processor to adjust the display parameter of the original image to meet a value condition by: applying image enhancement to each color channel of the original image to conform to a required clarity degree of the original image.

11. The server of claim 8, wherein the computer-readable instructions are executable by the processor to adjust the display parameter of the original image to meet a value condition by: cropping a non-imaging area of the object off the original image; and adjusting the size of the original image after cropping into the preset size.

12. The server of claim 8, wherein the computer-readable instructions are executable by the processor to transform the display parameter of the original image according to the distribution condition to be met by the distribution of the display parameter to obtain a new image by: determining an image conversion condition for transforming the display parameter of the original image according to a value space of the display parameter of at least one category of the image and a distribution condition of the value space; and transforming the display parameter of the original image according to the image conversion condition to obtain the new image.

13. The server of claim 8, wherein the computer-readable instructions are executable by the processor to train the neural network model by: initializing the neural network model; initializing a distance calculation layer, a full connection layer and a classification layer which are sequentially connected to the neural network model to form a combined neural network model for classifying the prediction image, and inputting images from the training set and corresponding categories into the neural network model for iterative training until a loss function of the neural network model meets a convergence condition.

14. A computer readable storage medium (102), storing computer readable instructions executable by one or multiple processors to:

acquiring an original image and a category of an object in the original image;

adjusting a display parameter of the original image to meet a preset value range for the display parameter, wherein the display parameter comprises one of a resolution, size, color, orientation, brightness, contrast, and aspect ratio of the original image;

transforming the display parameter of the original image according to a distribution condition to obtain one or more new images, wherein the distribution condition is a preset condition to be met by the display parameter and is one of a preset uniform distribution, a preset random distribution, and a preset Gaussian distribution; training a neural network model using the category of the object in the original image and a training set constructed by combining the adjusted original image and the one or more new image, wherein before training the neural network model using the category of the object and the training set constructed by combining the adjusted original image and the one or more new image, the training set is constructed by combining of the adjusted original image and the one or more new images in pairs; and inputting an image to be predicted and a reference image labeled with a category of the object in the reference image into the neural network model after the neural network model is trained, and determining a category of the object in the image to be predicted.

**Patentansprüche**

1. Verfahren zur Bildklassifizierung, das von einem Server ausgeführt wird, das Folgendes umfasst:

Erfassen (101) eines Originalbildes und einer Objektkategorie in dem Originalbild;
Einstellen (103) eines Display-Parameters des Originalbildes, um einen voreingestellten Wertebereich für den Display-Parameter zu erfüllen, wobei der Display-Parameter eine Auflösung, Größe, Farbe, Ausrichtung, Helligkeit, einen Kontrast und/oder ein Seitenverhältnis des Originalbildes umfasst;
Transformieren (105) des Display-Parameters des Originalbildes gemäß einer Verteilungsbedingung, um ein oder mehrere neue Bilder zu erhalten, wobei die Verteilungsbedingung eine voreingestellte Bedingung ist, die durch den Display-Parameter des einen oder der mehreren neuen Bilder erfüllt werden soll, und eine voreingestellte Gleichverteilung, eine voreingestellte Zufallsverteilung und/oder eine voreingestellte Gauß-Verteilung ist;
Trainieren (107) eines neuralen Netzwerkmodells unter Verwendung der Objektkategorie in dem Originalbild und eines Trainings-Satzes, der durch Kombinieren des eingestellten Originalbildes und des einen oder der mehreren neuen Bilder erstellt wird, wobei vor dem Trainieren des neuronalen Netzwerkmodells unter Verwendung der Objektkategorie und des Trainings-Satzes, der durch Kombinieren des eingestellten Originalbildes und des einen oder der mehreren neuen Bilder erstellt wird, der Trainings-Satz durch Kombinieren des eingestellten Originalbildes und des einen oder der mehreren neuen Bilder in Paaren erstellt wird; und
Eingeben (109) eines vorherzusagenden Bildes und eines Referenzbildes, das mit einer Objektkategorie in dem Referenzbild beschriftet ist, in das neuronale Netzwerkmodell, nachdem das neuronale Netzwerkmodell trainiert wurde, und Bestimmen einer Objektkategorie in dem vorherzusagenden Bild.

2. Verfahren zur Bildklassifizierung nach Anspruch 1, wobei das Einstellen (103) des Display-Parameters des Originalbildes, damit der eingestellte Display-Parameter die Wertbedingung erfüllt, Folgendes umfasst:

Erfassen eines Bildbereichs einschließlich des Objekts in dem Originalbild;
Einstellen des Originalbildes, damit das Originalbild die gleiche Größe wie der Bildbereich des Objekts hat.

3. Verfahren zur Bildklassifizierung nach Anspruch 1, wobei das Einstellen (103) des Display-Parameters des Originalbildes, damit der eingestellte Display-Parameter die Wertbedingung erfüllt, Folgendes umfasst:
Anwenden einer Bildverbesserung auf jeden Farbkanal des Originalbildes, um einem erforderlichen Klarheitsgrad des Originalbildes zu entsprechen.

4. Verfahren zur Bildklassifizierung nach Anspruch 1, wobei das Einstellen (103) des Display-Parameters des Originalbildes, damit der eingestellte Display-Parameter die Wertbedingung erfüllt, Folgendes umfasst:

Ausschneiden des nicht bildgebenden Bereichs des Objekts aus dem Originalbild; und
Einstellen einer Größe des Originalbildes nach dem Ausschneiden, so dass es eine voreingestellte Größe hat.

5. Verfahren zur Bildklassifizierung nach Anspruch 1, wobei das Transformieren (105) des Display-Parameters des Originalbildes gemäß der Verteilungsbedingung, die durch die Verteilung des Display-Parameters zu erfüllen ist, um das neue Bild zu erhalten, Folgendes umfasst:

Bestimmen einer Bildwandlungsbedingung zum Transformieren des Display-Parameters des Originalbildes gemäß einem Wertebereich des Display-Parameters von mindestens einer Kategorie von Bildern und einer Verteilungsbedingung des Wertebereichs; und
Transformieren des Display-Parameters des Originalbildes gemäß der Bildwandlungsbedingung, um das neue Bild zu erhalten.

**6.** Verfahren zur Bildklassifizierung nach Anspruch 1, wobei das Training des neuronalen Netzwerkmodells Folgendes umfasst:

Initialisieren eines neuronalen Netzwerkmodells;
Initialisieren einer Abstandsberechnungsschicht, einer Vollverbindungsschicht und einer Klassifizierungsschicht, die sequentiell mit dem neuronalen Netzwerkmodell verbunden sind, um ein kombiniertes neuronales Netzwerkmodell zum Klassifizieren des vorherzusagenden Bildes zu erhalten, und Eingeben eines Bildes aus dem Trainings-Satz und einer entsprechenden Kategorie in das neuronale Netzwerkmodell zum iterativen Training, bis eine Verlustfunktion des neuronalen Netzwerkmodells eine Konvergenzbedingung erfüllt.

**7.** Verfahren zur Bildklassifizierung nach Anspruch 1, wobei das Eingeben des vorherzusagenden Bildes und des mit der Objektkategorie beschrifteten Referenzbildes in das neuronale Netzwerkmodell, nachdem das neuronale Netzwerkmodell trainiert wurde, und das Bestimmen der Objektkategorie in dem vorherzusagenden Bild Folgendes umfasst:

Extrahieren von Bildmerkmalen aus dem vorherzusagenden Bild und von Bildmerkmalen aus dem mit der Objektkategorie beschrifteten Referenzbild unter Verwendung eines kombinierten neuronalen Netzwerkmodells innerhalb des kombinierten neuronalen Netzwerkmodells, wobei das Referenzbild ein Bild aus dem Trainings-Satz ist;
Bestimmen eines Abstandsvektors der Bildmerkmale des vorherzusagenden Bildes und der Bildmerkmale des Referenzbildes, und Downsampling des Abstandsvektors; und
Abbilden des Abstandsvektors nach dem Downsampling auf einen vordefinierten Wertebereich, um eine Wahrscheinlichkeit zu erhalten, dass das vorherzusagende Bild zu der beschrifteten Objektkategorie im Referenzbild gehört.

**8.** Server (100), der einen Prozessor (101) und einen Speicher (102) umfasst, der computerlesbare Anweisungen speichert, die von dem Prozessor durchführbar sind zum:

Erfassen eines Originalbildes und einer Objektkategorie in dem Originalbild;
Einstellen eines Display-Parameters des Originalbildes, um einen voreingestellten Wertebereich für den Display-Parameter zu erfüllen, wobei der Display-Parameter eine Auflösung, Größe, Farbe, Ausrichtung, Helligkeit, einen Kontrast und/oder ein Seitenverhältnis des Originalbildes umfasst;
Transformieren des Display-Parameters des Originalbildes gemäß einer Verteilungsbedingung, um ein oder mehrere neue Bilder zu erhalten, wobei die Verteilungsbedingung eine voreingestellte Bedingung ist, die durch den Display-Parameter des einen oder der mehreren neuen Bilder erfüllt werden soll, und eine voreingestellte Gleichverteilung, eine voreingestellte Zufallsverteilung und/oder eine voreingestellte Gauß-Verteilung ist;
Trainieren eines neuronalen Netzwerkmodells unter Verwendung der Objektkategorie in dem Originalbild und eines Trainings-Satzes, der durch Kombinieren des eingestellten Originalbildes und des einen oder der mehreren neuen Bilder erstellt wird, wobei vor dem Trainieren des neuronalen Netzwerkmodells unter Verwendung der Objektkategorie und des Trainings-Satzes, der durch Kombinieren des eingestellten Originalbildes und des einen oder der mehreren neuen Bilder erstellt wird, der Trainings-Satz durch Kombinieren des eingestellten Originalbildes und des einen oder der mehreren neuen Bilder in Paaren erstellt wird; und
Eingeben eines vorherzusagenden Bildes und eines Referenzbildes, das mit einer Objektkategorie beschriftet ist, in das neuronale Netzwerkmodell, nachdem das neuronale Netzwerkmodell trainiert wurde, und Bestimmen einer Objektkategorie in dem vorherzusagenden Bild.

**9.** Server nach Anspruch 8, wobei die computerlesbaren Anweisungen durch den Prozessor durchführbar sind, um den Display-Parameter des Originalbildes so einzustellen, dass er eine Wertbedingung erfüllt, indem ein Bildbereich des Objekts in dem Originalbild erfasst wird und eine Größe des Originalbildes so eingestellt wird, dass sie mit einer Größe des Bildbereichs des Objekts übereinstimmt.

**10.** Server nach Anspruch 8, wobei die computerlesbaren Anweisungen durch den Prozessor durchführbar sind, um den Display-Parameter des Originalbildes so einzustellen, dass er eine Wertbedingung durch Folgendes erfüllt: Anwenden der Bildverbesserung auf jeden Farbkanal des Originalbildes, um einem erforderlichen Klarheitsgrad des Originalbildes zu entsprechen.

**11.** Server nach Anspruch 8, wobei die computerlesbaren Anweisungen durch den Prozessor durchführbar sind, um den Display-Parameter des Originalbildes so einzustellen, dass er eine Wertbedingung durch Folgendes erfüllt: Ausschneiden eines nicht bildgebenden Bereichs des Objekts aus dem Originalbild; und Einstellen einer Größe des Originalbildes nach dem Ausschneiden, so dass es eine voreingestellte Größe hat.

**12.** Server nach Anspruch 8, wobei die computerlesbaren Anweisungen durch den Prozessor zum Transformieren des Display-Parameters des Originalbildes gemäß der Verteilungsbedingung durchführbar sind, die durch die Verteilung des Display-Parameters zu erfüllen ist, um ein neues Bild durch Folgendes zu erhalten: Bestimmen einer Bildwandlungsbedingung zum Transformieren des Display-Parameters des Originalbildes gemäß einem Wertebereich des Display-Parameters von mindestens einer Bildkategorie und einer Verteilungsbedingung des Wertebereichs; und Transformieren des Display-Parameters des Originalbildes gemäß der Bildwandlungsbedingung, um das neue Bild zu erhalten.

**13.** Server nach Anspruch 8, wobei die computerlesbaren Anweisungen durch den Prozessor durchführbar sind, um das neuronale Netzwerkmodell durch Folgendes zu trainieren: Initialisieren des neuronalen Netzwerkmodells; Initialisieren einer Abstandsberechnungsschicht, einer Vollverbindungsschicht und einer Klassifizierungsschicht, die sequentiell mit dem neuronalen Netzwerkmodell verbunden sind, um ein kombiniertes neuronales Netzwerkmodell zum Klassifizieren des Vorhersagebildes zu erhalten, und Eingeben von Bildern aus dem Trainings-Satz und entsprechenden Kategorien in das neuronale Netzwerkmodell zum iterativen Training, bis eine Verlustfunktion des neuronalen Netzwerkmodells eine Konvergenzbedingung erfüllt.

**14.** Computerlesbares Speichermedium (102), das computerlesbare Anweisungen speichert, die von einem oder mehreren Prozessoren durchführbar sind zum:

Erfassen eines Originalbildes und einer Objektkategorie in dem Originalbild;
Einstellen eines Display-Parameters des Originalbildes, um einen voreingestellten Wertebereich für den Display-Parameter zu erfüllen, wobei der Display-Parameter eine Auflösung, Größe, Farbe, Ausrichtung, Helligkeit, einen Kontrast und/oder ein Seitenverhältnis des Originalbildes umfasst;
Transformieren des Display-Parameters des Originalbildes gemäß einer Verteilungsbedingung, um ein oder mehrere neue Bilder zu erhalten, wobei die Verteilungsbedingung eine voreingestellte Bedingung ist, die durch den Display-Parameter erfüllt werden soll, und eine voreingestellte Gleichverteilung, eine voreingestellte Zufallsverteilung und/oder eine voreingestellte Gauß-Verteilung ist;
Trainieren eines neuronalen Netzwerkmodells unter Verwendung der Objektkategorie in dem Originalbild und eines Trainings-Satzes, der durch Kombinieren des eingestellten Originalbildes und des einen oder der mehreren neuen Bilder erstellt wird, wobei vor dem Trainieren des neuronalen Netzwerkmodells unter Verwendung der Objektkategorie und des Trainings-Satzes, der durch Kombinieren des eingestellten Originalbildes und des einen oder der mehreren neuen Bilder erstellt wird, der Trainings-Satz durch Kombinieren des eingestellten Originalbildes und des einen oder der mehreren neuen Bilder in Paaren erstellt wird; und
Eingeben eines vorherzusagenden Bildes und eines Referenzbildes, das mit einer Objektkategorie im Referenzbild beschriftet ist, in das neuronale Netzwerkmodell, nachdem das neuronale Netzwerkmodell trainiert wurde, und Bestimmen einer Objektkategorie in dem vorherzusagenden Bild.

## Revendications

**1.** Procédé de classification d'images, exécuté par un serveur, comprenant :

acquérir (101) une image originale et une catégorie d'un objet dans l'image originale ;
ajuster (103) un paramètre d'affichage de l'image originale pour satisfaire une plage de valeurs prédéfinies pour le paramètre d'affichage, où le paramètre d'affichage comprend l'un parmi une résolution, une taille, une couleur, une orientation, une luminosité, un contraste et un rapport d'aspect de l'image originale ;
transformer (105) le paramètre d'affichage de l'image originale selon une condition de distribution pour obtenir une ou plusieurs nouvelles images, où la condition de distribution est une condition prédéfinie à remplir par le paramètre d'affichage de l'une ou plusieurs nouvelles images et est l'une parmi une distribution uniforme prédéfinie, une distribution aléatoire prédéfinie et une distribution gaussienne prédéfinie ;
entraîner (107) un modèle de réseau neuronal utilisant la catégorie de l'objet dans l'image originale et un ensemble d'apprentissage construit en combinant l'image originale ajustée et l'une ou plusieurs nouvelles images, où avant d'entraîner le modèle de réseau neuronal utilisant la catégorie de l'objet et l'ensemble d'apprentissage construit en combinant l'image originale ajustée et l'une ou plusieurs nouvelles images, l'ensemble d'apprentissage est construit en combinant l'image originale ajustée et l'une ou plusieurs nouvelles images par paires ; et
entrer (109) une image à prédire et une image de référence étiquetée avec une catégorie de l'objet dans l'image de référence dans le modèle de réseau neuronal après que le modèle de réseau neuronal est entraîné, et déterminer une catégorie de l'objet dans l'image à prédire.

**2.** Procédé de classification d'images selon la revendication 1, où l'ajustement (103) du paramètre d'affichage de l'image originale pour faire que le paramètre d'affichage ajusté satisfasse la condition de valeur comprend :

détecter une zone d'imagerie incluant l'objet dans l'image originale ;
ajuster l'image originale pour faire que l'image originale ait la même taille que la zone d'imagerie de l'objet.

**3.** Procédé de classification d'images selon la revendication 1, où l'ajustement (103) du paramètre d'affichage de l'image originale pour faire que le paramètre d'affichage ajusté satisfasse la condition de valeur comprend :
appliquer une amélioration d'image à chaque canal de couleur de l'image originale pour se conformer à un degré de clarté requis de l'image originale.

**4.** Procédé de classification d'images selon la revendication 1, où l'ajustement (103) du paramètre d'affichage de l'image originale pour faire que le paramètre d'affichage ajusté satisfasse la condition de valeur comprend :

recadrer une zone non imagée de l'objet de l'image originale ; et
ajuster une taille de l'image originale après le recadrage pour qu'elle soit d'une taille prédéfinie.

**5.** Procédé de classification d'images selon la revendication 1, où la transformation (105) du paramètre d'affichage de l'image originale selon la condition de distribution à remplir par la distribution du paramètre d'affichage pour obtenir la nouvelle image comprend :

déterminer une condition de conversion d'image pour transformer le paramètre d'affichage de l'image originale selon un espace de valeurs du paramètre d'affichage d'au moins une catégorie d'images et une condition de distribution de l'espace de valeurs ; et
transformer le paramètre d'affichage de l'image originale selon la condition de conversion d'image pour obtenir la nouvelle image.

**6.** Procédé de classification d'images selon la revendication 1, où le modèle de réseau neuronal d'apprentissage comprend :

initialiser un modèle de réseau neuronal ;
initialiser une couche de calcul de distance, une couche de connexion complète et une couche de classification qui sont connectées séquentiellement au modèle de réseau neuronal pour obtenir un modèle de réseau neuronal combiné pour classer l'image à prédire, et entrer une image de l'ensemble d'apprentissage et d'une catégorie correspondante dans le modèle de réseau neuronal pour un apprentissage itératif jusqu'à ce qu'une fonction de perte du modèle de réseau neuronal satisfasse une condition de convergence.

**7.** Procédé de classification d'images selon la revendication 1, où l'entrée de l'image à prédire et l'image de référence étiquetée avec la catégorie de l'objet dans le modèle de réseau neuronal après que le modèle de réseau neuronal est entraîné, et la détermination de la catégorie de l'objet dans l'image à prédire comprend :

extraire des caractéristiques d'image de l'image à prédire et des caractéristiques d'image de l'image de référence étiquetée avec la catégorie de l'objet utilisant un modèle de réseau neuronal combiné dans le modèle de réseau neuronal combiné, l'image de référence est une image de l'ensemble d'apprentissage ;
déterminer un vecteur de distance des caractéristiques d'image de l'image à prédire et les caractéristiques d'image de l'image de référence, et sous-échantillonner le vecteur de distance ; et mapper le vecteur de distance après le sous-échantillonnage avec un espace de valeurs prédéfinies pour obtenir une probabilité que l'image à prédire appartienne à la catégorie étiquetée de l'objet dans l'image de référence.

**8.** Serveur (100), comprenant un processeur (101) et une mémoire (102) qui stocke des instructions lisibles par ordinateur exécutables par le processeur pour :

acquérir une image originale et une catégorie d'un objet dans l'image originale ;
ajuster un paramètre d'affichage de l'image originale pour satisfaire une plage de valeurs prédéfinies pour le paramètre d'affichage, où le paramètre d'affichage comprend l'un parmi une résolution, une taille, une couleur, une orientation, une luminosité, un contraste et un rapport d'aspect de l'image originale ;
transformer le paramètre d'affichage de l'image originale selon une condition de distribution pour obtenir une ou plusieurs nouvelles images, où la condition de distribution est une condition prédéfinie à remplir par le paramètre d'affichage de l'une ou plusieurs nouvelles images et est l'une parmi une distribution uniforme prédéfinie, une distribution aléatoire prédéfinie et une distribution gaussienne prédéfinie ;

entraîner un modèle de réseau neuronal utilisant la catégorie de l'objet dans l'image originale et un ensemble d'apprentissage construit en combinant l'image originale ajustée et l'une ou plusieurs nouvelles images, où avant d'entraîner le modèle de réseau neuronal utilisant la catégorie de l'objet et l'ensemble d'apprentissage construit en combinant l'image originale ajustée et l'une ou plusieurs nouvelles images, l'ensemble d'apprentissage est construit en combinant l'image originale ajustée et l'une ou plusieurs nouvelles images par paires ; et

entrer une image à prédire et une image de référence étiquetée avec une catégorie de l'objet dans le modèle de réseau neuronal après que le modèle de réseau neuronal est entraîné, et déterminer une catégorie de l'objet dans l'image à prédire.

9. Serveur selon la revendication 8, où les instructions lisibles par ordinateur sont exécutables par le processeur pour ajuster le paramètre d'affichage de l'image originale pour satisfaire une condition de valeur en : détectant une zone d'imagerie de l'objet dans l'image originale, et ajustant une taille de l'image originale pour être conforme à une taille de la zone d'imagerie de l'objet.

10. Serveur selon la revendication 8, où les instructions lisibles par ordinateur sont exécutables par le processeur pour ajuster le paramètre d'affichage de l'image originale pour satisfaire une condition de valeur en : appliquant une amélioration d'image à chaque canal de couleur de l'image originale pour se conformer à un degré de clarté requis de l'image originale.

11. Serveur selon la revendication 8, où les instructions lisibles par ordinateur sont exécutables par le processeur pour ajuster le paramètre d'affichage de l'image originale pour satisfaire une condition de valeur en : recadrant une zone non imagée de l'objet de l'image originale ; et ajustant la taille de l'image originale après le recadrage dans la taille prédéfinie.

12. Serveur selon la revendication 8, où les instructions lisibles par ordinateur sont exécutables par le processeur pour transformer le paramètre d'affichage de l'image originale selon la condition de distribution à remplir par la distribution du paramètre d'affichage pour obtenir une nouvelle image en : déterminant une condition de conversion d'image pour transformer le paramètre d'affichage de l'image d'origine selon un espace de valeurs du paramètre d'affichage d'au moins une catégorie de l'image et une condition de distribution de l'espace de valeurs ; et transformant le paramètre d'affichage de l'image originale selon la condition de conversion d'image pour obtenir la nouvelle image.

13. Serveur selon la revendication 8, où les instructions lisibles par ordinateur sont exécutables par le processeur pour entraîner le modèle de réseau neuronal en : initialisant le modèle de réseau neuronal ; initialisant une couche de calcul de distance, une couche de connexion complète et une couche de classification qui sont connectées séquentiellement au modèle de réseau neuronal pour former un modèle de réseau neuronal combiné pour classer l'image de prédiction, et entrant des images de l'ensemble d'apprentissage et des catégories correspondantes dans le modèle de réseau neuronal pour un apprentissage itératif jusqu'à ce qu'une fonction de perte du modèle de réseau neuronal satisfasse une condition de convergence.

14. Support de stockage lisible par ordinateur (102), stockant des instructions lisibles par ordinateur exécutables par un ou de multiples processeurs pour :

acquérir une image originale et une catégorie d'un objet dans l'image originale ;

ajuster un paramètre d'affichage de l'image originale pour satisfaire une plage de valeurs prédéfinies pour le paramètre d'affichage, où le paramètre d'affichage comprend l'un parmi une résolution, une taille, une couleur, une orientation, une luminosité, un contraste et un rapport d'aspect de l'image originale ;

transformer le paramètre d'affichage de l'image originale selon une condition de distribution pour obtenir une ou plusieurs nouvelles images, où la condition de distribution est une condition prédéfinie à remplir par le paramètre d'affichage et est l'une parmi une distribution uniforme prédéfinie, une distribution aléatoire prédéfinie, et une distribution gaussienne prédéfinie ;

entraîner un modèle de réseau neuronal utilisant la catégorie de l'objet dans l'image originale et un ensemble d'apprentissage construit en combinant l'image originale ajustée et l'une ou plusieurs nouvelles images, où avant d'entraîner le modèle de réseau neuronal utilisant la catégorie de l'objet et l'ensemble d'apprentissage construit en combinant l'image originale ajustée et l'une ou plusieurs nouvelles images, l'ensemble d'apprentissage est construit en combinant l'image originale ajustée et l'une ou plusieurs nouvelles images par paires ; et

entrer une image à prédire et une image de référence étiquetée avec une catégorie de l'objet dans l'image de référence dans le modèle de réseau neuronal après que le modèle de réseau neuronal est entraîné, et déterminer une catégorie de l'objet dans l'image à prédire.

5. Input image to be predicted

6. Category of image to be predicted

6. Category of image to be predicted

2. Adjust original image /3. convert original image to obtain new image 4./ train neural network model

network

database

6. Category of image to be predicted

1. Original image and category of object in image

FIG.1

obtaining original image and category of object in original image
101

adjusting display parameter of original image, adjusted display parameter meets value condition
103

converting display parameter of original image according to distribution condition required to be met by display parameter to obtain new image
105

training neural network model using category of object and training set constructed by combining adjusted original image and new image
107

inputting image to be predicted and reference image labeled with category of object into neural network model after training, determining category of object in image to be predicted
109

FIG.2

FIG. 3

FIG. 4

x1
x2
.
.
.
xm

y1

ym

n   n1   n2     ns   m

FIG. 4

**input layer**

X[:,:,0]

| 0 | 0 | 0 | 0 | 0 | 0 | 0 |
|---|---|---|---|---|---|---|
| 0 | 0 | 1 | 1 | 0 | 0 | 0 |
| 0 | 2 | 2 | 2 | 2 | 1 | 0 |
| 0 | 1 | 0 | 0 | 1 | 0 | 0 |
| 0 | 0 | 1 | 1 | 0 | 0 | 0 |
| 0 | 1 | 2 | 0 | 0 | 2 | 0 |
| 0 | 0 | 0 | 0 | 0 | 0 | 0 |

X[:,:,1]

| 0 | 0 | 0 | 0 | 0 | 0 | 0 |
|---|---|---|---|---|---|---|
| 0 | 1 | 0 | 2 | 2 | 0 | 0 |
| 0 | 0 | 0 | 0 | 2 | 0 | 0 |
| 0 | 1 | 2 | 1 | 2 | 1 | 0 |
| 0 | 1 | 0 | 0 | 0 | 0 | 0 |
| 0 | 1 | 2 | 1 | 1 | 1 | 0 |
| 0 | 0 | 0 | 0 | 0 | 0 | 0 |

X[:,:,2]

| 0 | 0 | 0 | 0 | 0 | 0 | 0 |
|---|---|---|---|---|---|---|
| 0 | 2 | 1 | 2 | 0 | 0 | 0 |
| 0 | 1 | 0 | 0 | 1 | 0 | 0 |
| 0 | 0 | 2 | 1 | 0 | 1 | 0 |
| 0 | 0 | 1 | 2 | 2 | 2 | 0 |
| 0 | 2 | 1 | 0 | 0 | 1 | 0 |
| 0 | 0 | 0 | 0 | 0 | 0 | 0 |

**filter W0**

w0[:,:,0]

| -1 | 1 | 0 |
|----|---|---|
| 0 | 1 | 0 |
| 0 | 1 | 1 |

w0[:,:,1]

| -1 | -1 | 0 |
|----|----|---|
| 0 | 0 | 0 |
| 0 | -1 | 0 |

w0[:,:,2]

| 0 | 0 | 1 |
|---|---|---|
| 0 | 1 | 0 |
| 0 | -1 | -1 |

**filter W1**

W1[:,:,0]

| 1 | 1 | -1 |
|---|---|----|
| -1 | -1 | 0 |
| 0 | -1 | 1 |

...

**output layer**

O[:,:,0]

| 6 | 7 | 5 |
|---|---|---|
| 3 | -1 | -1 |
| 2 | -1 | 4 |

...

FIG. 5

| 1 | 1 | 2 | 4 |
|---|---|---|---|
| 5 | 6 | 7 | 8 |
| 3 | 2 | 1 | 0 |
| 1 | 2 | 3 | 4 |

| 6 | 8 |
|---|---|
| 3 | 4 |

x

y

FIG. 6

obtaining original eye fundus image and category of object in original eye fundus image

S11

adjusting display parameter of original eye fundus image to meet value condition, obtaining adjusted original eye fundus image

S12

converting display parameter of original eye fundus image according to distribution condition required to be met by display parameter to obtain new eye fundus image

S13

constructing initial neural network model by connecting distance calculation layer, full connection layer and sigmoid function-based classification layer to average pooling layer in Inception V3 trained using ImageNet, as combined neural network model

S14

training neural network model using category of object and training set constructed by combining adjusted original eye fundus image and new eye fundus image

S15

inputting eye fundus image to be predicted and reference image labeled with category of object into trained neural network model, determining category of image to be predicted

S16

FIG. 7

image to be predicted

reference image

Inception V3

prediction image feature

reference image feature

distance calculation layer

full connection layer

classification layer

prediction image category

FIG. 8

obtaining original eye image and category of object in original eye image — S21

adjusting display parameter of original eye image to meet value condition, obtaining adjusted original eye image — S22

converting display parameter of original eye image according to distribution condition required to be met by display parameter to obtain new eye image — S23

constructing initial neural network model by connecting distance calculation layer, full connection layer and sigmoid function-based classification layer to average pooling layer in Inception V3 trained using ImageNet, as combined neural network model — S24

training neural network model using category of object and training set constructed by combining adjusted original eye image and new eye image in pairs — S25

inputting eye image to be predicted and reference eye image labeled with category of object into trained neural network model, determining category of eye image to be predicted — S26

FIG. 9

100

Server

102

101

processor

memory

1021

operating
system

105

1022

application
program

106

104

user interface

network
interface

FIG. 10

acquiring module 11

adjusting module 13

converting module 15

training module 17

predicting module 19

FIG. 11

## REFERENCES CITED IN THE DESCRIPTION

**Patent documents cited in the description**

- CN 2017110602082

- EP 3218076 B1

**Non-patent literature cited in the description**

- Research on data augmentation for image classification based on convolution neural networks. **SHIJIE et al.** 2017 Chinese Automation congress (CAC). IEEE, 20 October 2017, 4165-4170
- Blood Vessel Segmentation in Eye Fundus Images. **SAVU et al.** 2017 International Conference on Smart Systems and Technologies (SST). IEEE, 18 October 2017, 245-249

- **OTÁLORA et al.** Training Deep Convolutional Neural Networks with Active Learning for Exudate Classification in Eye Fundus Images. *Big Data Analytics in the Social and Ubiquitous context, 5th International Workshop on Modeling Social Media, MSM 2014, 5th International Workshop on Mining Ubiquitous and Social Environments, MUSE 2014, and First International Workshop on machine learning,* 08 September 2017, 146-154